# EUROPEAN PATENT SPECIFICATION

(11) **EP 3 499 975 B1**
(45) Date of publication and mention of the grant of the patent: **24.01.2024**
(21) Application number: 17838411.1
(22) Date of filing: 31.05.2017
(51) Int. Cl.: H04W 52/02, H04W 68/08

(54) **INFORMATION PROCESSING METHOD AND APPARATUS, UE, BASE STATION, AND STORAGE MEDIUM**
INFORMATIONSVERARBEITUNGSVERFAHREN UND -VORRICHTUNG, BENUTZERVORRICHTUNG UND SPEICHERMEDIUM
PROCÉDÉ ET APPAREIL DE TRAITEMENT D'INFORMATIONS, UE, BASE STATION, ET SUPPORT DE STOCKAGE

(30) Priority: 11.08.2016 CN 201610665325; 29.09.2016 CN 201610866516
(43) Date of publication of application: 19.06.2019
(73) Proprietor: ZTE Corporation, Shenzhen, Guangdong 518057 (CN)
(72) Inventor: CHEN, Lin, Shenzhen Guangdong 518057 (CN); CHEN, Yuqin, Shenzhen Guangdong 518057 (CN); HUANG, Ying, Shenzhen Guangdong 518057 (CN); LUO, Wei, Shenzhen Guangdong 518057 (CN)
(74) Representative: Aipex B.V.
(86) International application number: PCT/CN2017/086719
(87) International publication number: WO 2018/028279

(56) References cited:
- EP-A1- 2 929 751
- EP-B1- 2 929 751
- WO-A1-2015/130076
- CN-A- 104 717 714
- CN-A- 104 869 526
- CN-A- 105 338 513
- CN-A- 105 357 757
- CN-A- 105 828 453
- US-A1- 2016 044 740

## Description

### TECHNICAL FIELD

The present invention relates to device-to-device (D2D) technologies and in particular, to an information processing method and apparatus.

### BACKGROUND

With the development of wireless multimedia services, people's demand for high data rates and user experience is increasing, which puts high requirements for the system capacity and coverage of traditional cellular networks. In another aspect, application scenarios such as public security, social networks, proximity-based data sharing, and local advertising have led to an increasing demand for understanding and communicating with people or things nearby, which may be called proximity services (ProSe). Conventional base station-centered cellular networks have significant limitations in supporting high data rates and proximity services. Under this background, the D2D technology, which represents a new direction for future communication technologies, has emerged. The application of the D2D technology may reduce the burden of cellular networks, reduce the battery power consumption of the user equipment, increase the data rate, and improve the robustness of the network infrastructure, which satisfies the requirements for high data rate services and proximity services. Currently, the D2D technology is also called ProSe, or sidelink (SL).

The D2D technology may work in licensed bands or unlicensed bands, allowing multiple UEs for supporting D2D functions, that is, D2D user equipments (D2D UEs), to perform direct discovery/direct communication in a case with network infrastructure or in a case without network infrastructure.

In application scenarios of the D2D technology, an urgent problem to be solved is to achieve power saving in a case where a remote UE, through the forwarding of a relay UE, implements data and/or signaling interaction between networks and the data interaction between the UE and the peer UE.

Document US2016/0044740A1 provides systems and methods for utilizing non-overlapping time periods within one or more DRX cycles configured for a D2D capable wireless device for different types of operations. In some embodiments, these different types of operations are cellular and D2D operations such that the D2D capable wireless device performs cellular and D2D operations (e.g., reception of cellular and D2D signals) during non-overlapping time periods during one or more DRX cycles. In this manner, a D2D capable wireless device that, for example, can only receive one type of signal at a time is enabled to receive both cellular and D2D signals. Document WO2014092612A1 proposes a wireless device and a method therein for controlling DRX in the wireless device. The wireless device is capable of cellular and D2D communication. The method comprises: when receiving a first uplink cellular communication grant, activating, for a first period of time, t1, a DRX-wake state for a cellular DRX configuration during which DRX-wake state the wireless device is configured to receive a second uplink cellular communication grant; and when receiving a first D2D communication grant, activating, for a second period of time, t2, the DRX-wake state for a D2D DRX configuration, which D2D DRX configuration is separate from the cellular DRX configuration, and during which DRX-wake state the wireless device is configured to receive a second D2D communication grant. Thereby the wireless device is capable of controlling DRX the wireless device using both the cellular DRX configuration and the D2D DRX configuration.

Document EP3113548A1 provides a method and a device for reducing the power of a device in a wireless communication system supporting direct D2D communication. A method, for transmitting a signal of a device in a wireless communication system supporting direct D2D communication according to the present invention, comprises the steps of: entering sleep mode in direct D2D communication between a device and an opponent device; if data to be transmitted to the opponent device is generated, transmitting a paging signal for the opponent device to a base station connected to the device, thereby requesting transmission of the paging signal to the opponent device; and resuming the D2D communication with the opponent device that has received the paging signal through the base station.

Another prior art example is disclosed in EP2929751 A1.

### SUMMARY

To solve above-mentioned technical problem, embodiments of the present invention provide an information processing method and apparatus according independent claims. Further improvements are provided in dependent claims.

The invention is set out in the appended set of claims.

The embodiments of the present invention provide an information processing method and apparatus, a UE, a base station and a computer-readable storage medium. In the information processing method, a remote UE receives PC5 discontinuous reception configuration information, and the remote UE performs PC5 discontinuous reception configuration and performs PC5 discontinuous reception. A relay UE performs PC5 transmission based on the PC5 discontinuous reception configuration information, and performs a PC5 discontinuous reception mechanism between the remote UE and the relay UE. In such a way, the remote UE does not need to listen to a data packet transmitted by the relay UE in real time, thereby greatly reducing the energy consumption caused by the listening of the remote UE.

The base station receives remote UE information. According to the remote UE information, the base station transmits paging information for paging the remote UE to the relay UE. The remote UE is in a radio resource control (RRC) idle state. The relay UE receives the paging information transmitted by the base station. The relay UE transmits the paging information to the remote UE. When the remote UE is in the RRC idle state, the relay UE forwards the paging information for paging the remote UE. In such a way, the remote UE does not need to be in an RRC connection state in real time, thereby greatly reducing the energy consumption of the remote UE.

### BRIEF DESCRIPTION OF DRAWINGS

In the drawings (which are not necessarily drawn to scale), similar reference numbers in the drawings denote similar components in different views. The similar reference numbers having different letter suffixes may denote different examples of the similar components. The drawings illustrate generally, by way of example, but not by way of limitation, various embodiments discussed in the present invention.
FIG. 1 is an application scenario of D2D technology in the existing art;
FIG. 2A-2C are schematic diagrams for network coverage states of a remote UE in the D2D technology;
FIG. 3 is a schematic diagram of a process in which a remote UE in an RRC restriction state receives paging information forwarded by a relay UE according to an embodiment of the present invention;
FIG. 4 is a flowchart of an information processing method on a remote LTE side according to an embodiment 1 of the present invention;
FIG. 5 is a flowchart of an information processing method on a relay UE side according to an embodiment 1 of the present invention;
FIG. 6 is a flowchart of an information processing method on a relay UE side according to an embodiment 2 of the present invention;
FIG. 7 is a flowchart of an information processing method on a base station side according to an embodiment 2 of the present invention;
FIG. 8 is a schematic diagram of a process of performing PC5 discontinuous reception configuration for a remote UE through a base station according to an embodiment 3 of the present invention;
FIG. 9 is a schematic diagram of a process of performing PC5 discontinuous reception configuration for a remote UE through a relay UE according to an embodiment 4 of the present invention;
FIG. 10 is a schematic diagram of a process in which a base station performs PC5 discontinuous reception configuration for a remote UE through relaying of a relay UE according to an embodiment 5 of the present invention;
FIG. 11 is a schematic diagram of a process in which a remote UE requests a relay UE to forward a paging message according to an embodiment 6 of the present invention;
FIG. 12 is a schematic diagram of a process in which a remote UE requests a relay UE to forward a paging message according to an embodiment 7 of the present invention;
FIG. 13 is a schematic diagram of a process in which a relay UE listens to paging information of a remote UE according to a request of the remote UE and transmits the paging information to the remote UE according to an embodiment 8 of the present invention;
FIG. 14 is a structure diagram of an information processing apparatus on a remote UE side according to an embodiment 9 of the present invention;
FIG. 15 is a structure diagram of an information processing apparatus on a relay UE side according to an embodiment 9 of the present invention;
FIG. 16 is a structure diagram of an information processing apparatus on the relay UE side according to an embodiment 10 of the present invention;
FIG. 17 is a structure diagram of an information processing apparatus on a base station side according to an embodiment 10 of the present invention;
FIG. 18 is a structure diagram of a hardware structure of a remote UE according to an embodiment 11 of the present invention;
FIG. 19 is a structure diagram of a hardware structure of a relay UE according to an embodiment 11 of the present invention;
FIG. 20 is a structure diagram of a hardware structure of a relay UE according to an embodiment 12 of the present invention; and
FIG. 21 is a structure diagram of a hardware structure of a base station according to an embodiment 12 of the present invention.

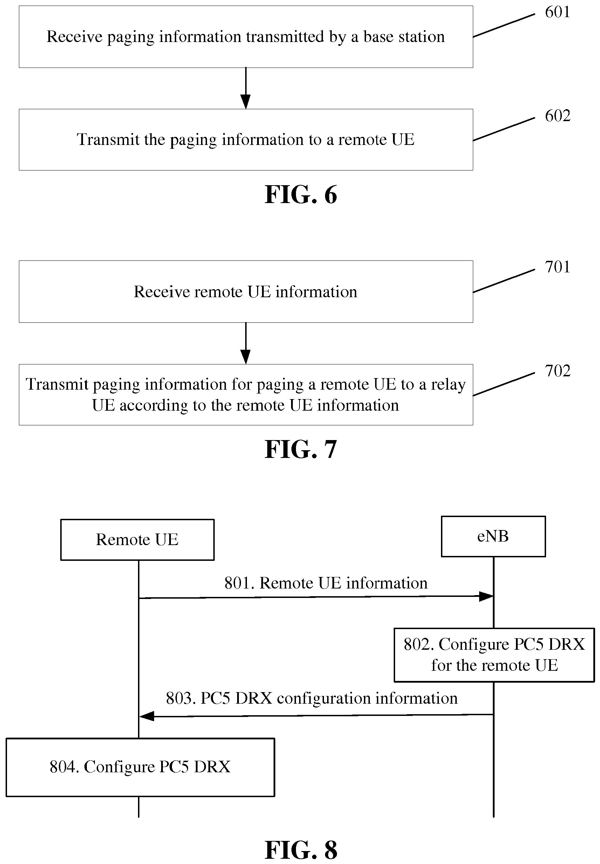

Where the embodiments related to FIGS. 6-7, 12-13 and 16-20 are not covered by the claims.

### DETAILED DESCRIPTION

Hereinafter the present invention will be further described in detail in conjunction with the drawings and embodiments.

The D2D technology generally includes D2D discovery technology and D2D communication technology. The D2D discovery technology refers to a technology for deciding/determining whether a first user equipment (UE) is adjacent to a second UE. Generally, D2D UEs may discover each other by transmitting or receiving the discovery signal/information. The D2D communication technology refers to a technology in which part or all of the communication data between the D2D UEs may directly communicate without passing through the network infrastructure.

A communication system adopting the D2D technology may be referred to a device pass-through system.

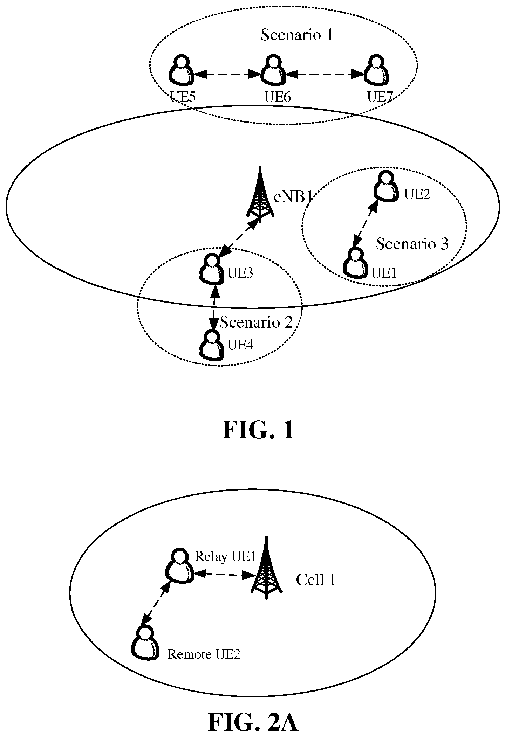

FIG. 1 is an application scenario of D2D technology in the existing art. There are three main application scenarios for the D2D technology.
1) The UE1 and the UE2 perform data interaction under the coverage of the cellular network, and the user plane data does not pass through the network infrastructure, as shown in scenario 1 in FIG. 1.
2) The UE relay transmission in the poor coverage area/in no coverage area, as in scenario 2 in FIG. 1, allows the UE4 with poor signal quality to communicate with the network through the UE3 having network coverage nearby, thereby helping the operator to expand coverage and increase capacity.
3) In the event of an earthquake or other emergencies, and the cellular network is not working properly, direct communication between devices is allowed. As in scenario 3 in FIG. 1, the control plane data and the user plane data between the UE5, the UE6 and the UE 7 do not pass through the network infrastructure so as to perform one-hop or multi-hop data communication.

For the UE-to-network relay scenario shown in the scenario 2 in FIG. 1, the UE3 may communicate with the network side by using the existing LTE, and may also serve as a relay terminal (the UE4 in FIG. 1) out of coverage to communicate by using the D2D technology. The communication by using the D2D technology includes D2D discovery and/or D2D communication. As shown in FIG. 1, if the UE4 out of coverage or the UE4 with poor signal quality transmits the data to the base station through the UE3 within the network coverage, the UE4 may be referred to a remote UE, and the UE3 may be referred to a relay UE. In addition, the remote UE in scenario 2 is not limited to a UE with no coverage (such as the UE4). For a wearable device, a machine type communication (MTC) device, or an Internet of Things (IoT) device in a normal coverage state or in an extended coverage state, the data and/or signaling interacted between the relay UE and the network is forwarded through the relay UE, thereby implementing power saving.

Currently, in the application scenario where the remote UE implements the data interaction and/or the signaling interaction between networks through the transmission of the relay UE, there is no systematic and complete solution for the power saving mechanism of the remote UE and the relay UE.

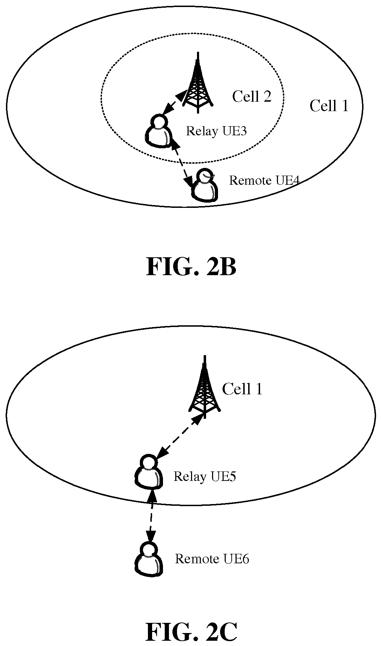

Generally, the remote UE may be various types of devices, including a wearable device, Cat-0, Cat-1, Cat-M1 and an NB-IoT UE (with specific reference to related provisions in the LTE). As shown in FIG. 2, these devices may be in the normal coverage state (FIG. 2A), in the extended coverage state (FIG. 2B), or in the state with no coverage (FIG. 2C). For scenarios shown in FIG. 2A and FIG. 2B, although the remote UE may be directly interact with the network, the remote UE may find the relay UE nearby to forward a data packet or even forward control signaling. For the scenario shown in FIG. 2C, since the remote UE is in the state with no coverage, the remote UE may only find the relay UE nearby to access the network, and the relay UE forwards the data and the control signaling.

For the remote UE which forwards the data through the relay UE, after completing one round of data transmission, subsequently, only intermittent data packets need to be transmitted. When the remote UE does not actively transmit a data packet, the remote UE maintains the PC5 connection with the relay UE, and does not transmit any information. When the remote UE does not transmit or receive the data packet forwarded by the relay UE for a long time, the remote UE may initiate a keep-alive procedure to determine whether the relay UE is still nearby. However, the keep-alive procedure does not save power, because in principle, the remote UE needs to continuously listen to whether the remote UE can receive the data packet transmitted by the relay UE to the remote UE. In order to more effectively reduce the listening energy consumption of the remote UE, in the embodiments of the present invention, a PC5 discontinuous reception mechanism is performed between the remote UE and the relay UE. That is, the relay UE transmits only possible data packets within a predetermined PC5 on-duration, and the remote UE may enter a dormant state and no longer listen to the data packets transmitted by the relay UE on the PC5 interface in a non-on-duration. That is, the remote UE receives PC5 discontinuous reception configuration information; and based on PC5 discontinuous reception configuration information, performs PC5 discontinuous reception configuration and performs PC5 discontinuous reception.

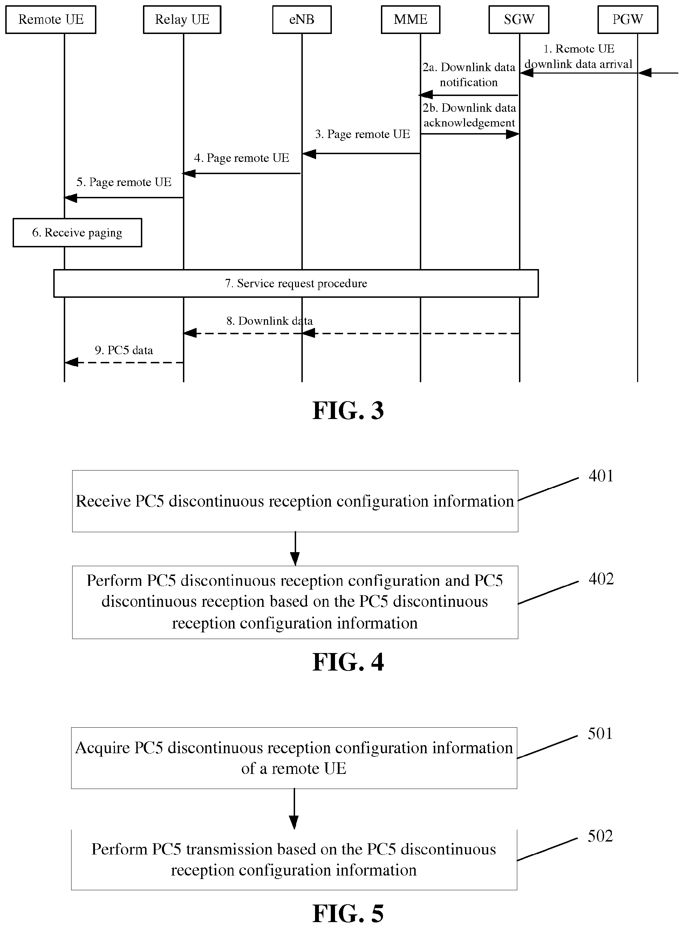

In addition, from the perspective of the base station, when the remote UE transmits data to the network through the relaying, the remote UE is in the RRC connection state. When subsequently the remote UE has no data packet which needs to be transmitted, according to the conventional LTE procedure, the base station possibly triggers to release S1 of the remote UE and the RRC connection, and the corresponding remote UE enters an RRC idle state. Assuming that at this time, a public data network gateway (PGW)/a serving gateway (SGW) receives downlink data transmitted to the remote UE, the MME may be triggered to initiate to page the remote UE, as shown in FIG. 3. Assuming that the remote UE is in the state with no coverage, and cannot directly listen to paging information broadcasted by the base station (an evolved node, eNB), or assuming that the remote UE is in the extended coverage state, and does not expect to directly listen to the paging information broadcasted by the base station, in both cases, the relay UE may be considered to forward the paging information for paging the remote UE. As shown in FIG. 3, the remote UE in the RRC idle state, after receiving the paging information forwarded by the relay UE, may initiate a service request procedure and re-access the network. After that, the data transmitted to the remote UE is forwarded to the remote UE through the relay UE. In view of this, in the embodiments of the present invention, the relay UE receives the paging information transmitted by the base station, and forwards the paging information to the remote UE. The remote UE is in the RRC idle state.

It is to be noted that the UEs described in the embodiments of the present invention are UEs for supporting the D2D function.

### Embodiment 1

An embodiment of the present invention provides an information processing method. The method is applied to a remote user equipment (UE). That is, the method is applied to a device pass-through system.

The remote UE refers to the UE which accesses the network and performs communication through the relay UE in the device pass-through system.

As shown in FIG. 4, the method includes the steps 401 and 402 described below.

In step 401, PC5 discontinuous reception configuration information is received.

The PC5 interface refers to a direct communication interface between UEs defined by the LTE.

The PC5 discontinuous reception configuration information includes at least one of:
a discontinuous reception period, an on-duration, a reception resource indication, a first inactive timer, a second inactive timer, a connection indication, a relay paging indication, a paging group identifier, and a remote UE identifier.

The on-duration is configured to indicate a duration of PC5 reception on the remote UE.

The first inactive timer is configured to indicate timing when the remote UE triggers to enter the PC5 discontinuous reception.

The second inactive timer is configured to indicate timing when the remote UE triggers to release the PC5 connection.

The connection indication is configured to indicate whether the remote UE maintains the PC5 connection, or indicate a PC5 connection state of the remote UE, such as PC5 connection establishment or PC5 connection release.

The relay paging indication is configured to indicate that the relay UE forwards the paging information of the remote UE or indicate that the relay UE supports paging forwarding.

The paging group identifier is configured to indicate a destination layer-2 identifier for transmitting the paging information.

The reception resource indication may include at least one of: a device-to-device (D2D) discovery/D2D communication resource indication, a frame offset, a subframe offset, a resource pattern/bitmap, a resource index, a D2D discovery transmission/reception resource pool, a D2D communication transmission/reception resource pool, and a D2D discovery/communication transmission/reception resource pool index.

The D2D communication transmission/reception resource pool may further include scheduling control information and/or data resource pool.

In practical application, the specific implementation of the step may include:
receiving the PC5 discontinuous reception configuration information from the base station; or
receiving the PC5 discontinuous reception configuration information from the relay UE. The PC5 discontinuous reception configuration information refers to the PC5 discontinuous reception configuration information configured by the relay UE or configured by the base station.

In one embodiment, when the received PC5 discontinuous reception configuration information is configured by the base station, the method further includes the step described below.

The remote UE information is directly transmitted to the base station, or the remote UE information is transmitted to the base station through the relay UE.

In one embodiment, when the received PC5 discontinuous reception configuration information is configured by the relay UE, the method further includes the step described below.

The remote UE information is directly transmitted to the relay UE.

The remote UE information includes at least one of: a remote UE identifier, a remote UE mobility state, a remote UE power saving indication, a remote UE type, a remote UE coverage state, Uu discontinuous reception configuration of the remote UE, a relay forwarding paging indication, and information of the relay UE connected/paired/associated with the remote UE. The connected/paired/associated refers to the connected or paired or associated.

The remote UE identifier includes at least one of:
a ProSe UE identifier, a layer-2 UE identifier, a C-RNTI, an S-TMSI, an IMSI, an eNBX2APID, an eNBS1APID, and a GUTI.

The remote UE type includes at least one of:
a public secure UE/a non-public secure UE, a UE category, and a bandwidth limited UE/a common UE.

The UE category includes at least one of: category 0, category 1, category M1, and NB-IoT. These categories are device capability categories defined by the LTE.

The remote UE coverage state includes at least one of: normal coverage, extended coverage, and no coverage.

The remote UE mobility state includes at least one of: stationary, roaming, and mobile (referring to moving frequently, rather than moving occasionally).

The relay forwarding paging indication includes at least one of: a relay forwarding remote UE paging request indication, a relay forwarding remote UE paging indication, and a forwarding paging indication of the connected/paired/associated relay UE.

The information of the relay UE connected/paired/associated with the remote UE includes at least one of: a relay UE identifier, an identifier of a cell serving the relay UE/an identifier of a cell where the relay UE resides, and an identifier of a base station serving the relay UE/an identifier of a base station where the relay UE resides.

The Uu discontinuous reception configuration of the remote UE includes at least one of:
a discontinuous reception period, a long discontinuous reception period, a short discontinuous reception period, and an on-duration.

The discontinuous reception period, the long discontinuous reception period and the short discontinuous reception period are discontinuous reception periods defined by the LTE. The discontinuous reception period is used in the idle state, and the long discontinuous reception period and the short discontinuous reception period are supported in the connection state.

In step 402, PC5 discontinuous reception configuration is performed based on the PC5 discontinuous reception configuration information, and PC5 discontinuous reception is performed. The step in which the PC5 discontinuous reception is performed specifically includes: acquiring paging occasion according to the PC5 discontinuous reception configuration, and receiving paging information transmitted by the relay UE at the paging occasion; and/or acquiring the on-duration according to the PC5 discontinuous reception configuration, and receiving data/the paging information transmitted by the relay UE within the on-duration.

The paging information transmitted by the relay UE includes at least one of:
a paging indication, a paging message type, a remote UE identifier, and a data arrival indication. The step in which the paging information transmitted by the relay UE is received at the paging occasion/within the on-duration specifically includes: receiving scheduling control information transmitted by the relay UE and/or a data packet corresponding to the scheduling control information, determining that the data packet is the paging information when an identifier contained in the scheduling control information and/or a destination identifier of a data packet media access control (MAC) subhead correspond to a paging group identifier, determining whether the paging information contains a remote UE identifier, and when the paging information includes the remote identifier, determining that the remote UE is paged and initiates a service request procedure.

In another example, the step in which the paging information transmitted by the relay UE is received at the paging occasion/within the on-duration specifically includes: receiving the scheduling control information transmitted by the relay UE and/or the data packet corresponding to the scheduling control information, and when the identifier contained in the scheduling control information and/or the destination identifier of the data packet MAC subhead correspond to the remote UE identifier and the data packet contains the paging information, determining that the remote UE is paged and initiates the service request procedure.

In another example, the step in which the paging information transmitted by the relay UE is received at the paging occasion/within the on-duration specifically includes: receiving and parsing wireless local area network (WLAN)/Bluetooth (BT) data transmitted by the relay UE, and when the WLAN/the BT data includes the paging information for paging the remote UE, determining that the remote UE is paged and initiates the service request procedure.

In another example, the step in which the paging information transmitted by the relay UE is received at the paging occasion/within the on-duration specifically includes: receiving a discovery message transmitted by the relay UE, and when the discovery message contains the paging information for paging the remote UE, determining that the remote UE is paged and initiates the service request procedure.

The step in which the data transmitted by the relay UE is received within the on-duration specifically includes: receiving scheduling control information transmitted by the relay UE and/or the data packet corresponding to the scheduling control information, and when the identifier contained in the scheduling control information and/or the destination identifier of the data packet MAC subhead correspond to the remote UE identifier, parsing the received data packet (parsing an access sub-stratum).

In the practical application, when the data transmitted to the remote UE fails to be detected within the on-duration, or when the data reception is finished within the on-duration without subsequent data transmission, the remote UE enters a dormant state.

In the processing procedure of the remote UE described above, a processing of the relay UE is correspondingly involved. Therefore, an embodiment of the present invention further provides an information processing method applied to the relay UE. The relay UE refers to the UE which implements relay function (providing the remote UE-to-network data forwarding for the remote UE) in the device pass-through system. As shown in FIG. 5, the method includes the steps 501 and 502 described below.

In step 501, the PC5 discontinuous reception configuration information of the remote UE is acquired.

In the practical application, the relay UE may receive the PC5 discontinuous reception configuration information from the base station. In another example, the PC5 discontinuous reception configuration information may be acquired by configuring the PC5 discontinuous reception configuration information for the remote UE.

In step 502, PC5 discontinuous transmission is performed based on the PC5 discontinuous reception configuration information.

Specifically, the paging occasion is acquired according to the discontinuous reception configuration information, and the paging information corresponding to the remote UE is transmitted at the paging occasion; and/or
the on-duration is acquired according to the PC5 discontinuous reception configuration information, and discovery information or data corresponding to the remote UE is transmitted within the on-duration.

From the above description, in this embodiment, PC5 connection exists between the remote UE and the relay UE.

In the information processing method provided by the embodiments of the present invention, the remote UE receives the PC5 discontinuous reception configuration information, performs PC5 discontinuous reception configuration based on the PC5 discontinuous reception configuration information and performs PC5 discontinuous reception. A relay UE performs PC5 transmission based on the PC5 discontinuous reception configuration information, and performs a PC5 discontinuous reception mechanism between the remote UE and the relay UE. In such a way, the remote UE does not need to listen to the data packet transmitted by the relay UE in real time, which greatly reduces the energy consumption caused by the listening of the remote UE, thereby implementing the purpose of the power saving of the remote UE.

### Embodiment 2

This embodiment is not covered by the claims.

An embodiment of the present invention provides an information processing method. The method is applied to a relay UE. That is, the method is applied to a device pass-through system.

The relay UE refers to the UE which implements relay function (providing the remote UE-to-network data forwarding for the remote UE) in the device pass-through system.

As shown in FIG. 6, the method includes the steps 601 and 602 described below.

In step 601, paging information transmitted by the base station is received.

Specifically, the paging information transmitted by the base station is received; or the paging information transmitted by the base station is received according to the forwarding paging resource configuration; or the paging information for paging the remote UE is received.

The remote UE refers to the UE which accesses the network and performs communication through the relay UE in the device pass-through system.

The step in which the paging information transmitted by the base station is received according to forwarding paging resource configuration specifically includes:
calculating the paging occasion according to forwarding paging UE/UE group identification information in the forwarding paging resource configuration, and receiving the paging information corresponding to the paging occasion; or
calculating the paging occasion according to a forwarding paging period, a forwarding paging frame offset and/or a forwarding paging subframe offset in the forwarding paging resource configuration, and receiving the paging information corresponding to the paging occasion.

The step in which the paging information for paging the remote UE is received includes:
calculating the paging occasion according to an identifier of a connected/paired/associated remote UE and a Uu discontinuous reception configuration information of the connected/paired/associated remote UE, and receiving the paging information corresponding to the paging occasion; or
calculating the paging occasion according to a relay UE identifier and/or the Uu discontinuous reception configuration information of the relay UE, and receiving information for paging the connected/paired/associated the remote UE corresponding to the paging occasion; or
receiving the paging information for paging the remote UE and transmitted by the base station through specific signaling.

In an embodiment, before the step 601 described above, the method may further include: receiving remote UE information transmitted by the remote UE.

The remote UE information includes at least one of: a remote UE identifier, a remote UE mobility state, a remote UE power saving indication, a remote UE type, a remote UE coverage state, Uu discontinuous reception configuration of the remote UE, a relay forwarding paging indication, and information of the relay UE connected/paired/associated with the remote UE.

The remote UE identifier includes at least one of:
a ProSe UE identifier, a layer-2 UE identifier, a C-RNTI, an S-TMSI, an IMSI, an eNBX2APID, an eNBS1APID, and a GUTI.

The remote UE type includes at least one of:
a public secure UE/a non-public secure UE, a UE category, and a bandwidth limited UE/a common UE.

The UE category includes at least one of: category 0, category 1, category M1, and NB-IoT. These categories are device capability categories defined by the LTE.

The remote UE coverage state includes at least one of: normal coverage, extended coverage, and no coverage.

The remote UE mobility state includes at least one of: stationary, roaming, and mobile (referring to moving frequently, rather than moving occasionally).

The relay forwarding paging indication includes at least one of: a relay forwarding remote UE paging request indication, a relay forwarding remote UE paging indication, and a forwarding paging indication of the connected/paired/associated relay UE.

The information of the relay UE connected/paired/associated with the remote UE includes at least one of: a relay UE identifier, an identifier of a cell serving the relay UE/an identifier of a cell where the relay UE resides, and an identifier of a base station serving the relay UE/an identifier of a base station where the relay UE resides.

The Uu discontinuous reception configuration of the remote UE includes at least one of:
a discontinuous reception period, a long discontinuous reception period, a short discontinuous reception period, and an on-duration.

The discontinuous reception period, the long discontinuous reception period and the short discontinuous reception period are discontinuous reception periods defined by the LTE. The discontinuous reception period is used in the idle state, and the long discontinuous reception period and the short discontinuous reception period are supported in the connection state.

In the practical application, after receiving the remote UE information transmitted by the remote UE, the relay UE may transmit paging forwarding acknowledgement information or paging forwarding failure information to the remote UE, where the paging forwarding acknowledgement information includes a paging forwarding indication.

In an embodiment, before the step 601 described above, the method may further include: acquiring forwarding paging resource configuration.

The forwarding paging resource configuration includes at least one of:
forwarding paging UE/UE group identification information;
a forwarding paging period; and
a frame offset and/or a subframe offset corresponding to forwarding paging occasion.

The received paging information includes at least one of:
an identifier of one or more paged UEs; and
an identifier of one or more paged remote UEs.

For each of paged UE the received paging information further may include at least one of:
an identifier of a connected/paired/associated remote UE;
a data arrival indication of the connected/paired/associated remote UE; and
a paging forwarding indication of the connected or paired or associated remote UE.

For each of paged UE the received paging information further may include at least one of:
an indication for indicating whether the each paged remote UE is in no coverage/UE no coverage indication;
an indication for indicating whether the each paged remote UE is in extended coverage/UE extended coverage indication;
a public secure UE indication;
a data arrival indication; and
a paging forwarding indication.

In step 602, the paging information is transmitted to a remote UE.

The remote UE is in the RRC idle state.

Specifically, the relay UE may transmit the paging information to the remote UE through one of PC5/sidelink, WLAN and BT technologies.

The paging information transmitted to the remote UE includes at least one of: an identifier of one or more paged remote UEs, a paging indication, a paging information type, and a data arrival indication.

The step in which the paging information is transmitted to a remote UE includes:
transmitting the received paging information; or
transmitting the paging information corresponding to no coverage/ extended coverage/a common secure UE; or
transmitting the paging information of the remote UE connected/paired/associated with the relay UE; or
transmitting the paging information of the remote UE which is requested for paging forwarding.

In the processing procedure of the relay UE described above, a processing of the base station is correspondingly involved. Therefore, an embodiment of the present invention further provides an information processing method. The method is applied to the base station. As shown in FIG. 7, the method includes the steps 701 and 702 described below.

In step 701, remote UE information is received.

Specifically, the base station receives the remote UE information transmitted by the relay UE; or the base station receives the remote UE information transmitted by the MME.

In the practical application, before receiving the remote UE information transmitted by the MME, the method includes:
transmitting the remote UE information to the MME.

The remote UE information includes at least one of: a remote UE identifier, a remote UE mobility state, a remote UE power saving indication, a remote UE type, a remote UE coverage state, Uu discontinuous reception configuration of the remote UE, a relay forwarding paging indication, and information of the relay UE connected/paired/associated with the remote UE.

The remote UE identifier includes at least one of:
a ProSe UE identifier, a layer-2 UE identifier, a C-RNTI, an S-TMSI, an IMSI, an eNBX2APID, an eNBS1APID, and a GUTI.

The remote UE type includes at least one of:
a public secure UE/a non-public secure UE, a UE category, and a bandwidth limited UE/a common UE.

The UE category includes at least one of: category 0, category 1, category M1, and NB-IoT. These categories are device capability categories defined by the LTE.

The remote UE coverage state includes at least one of: normal coverage, extended coverage, and no coverage.

The remote UE mobility state includes at least one of: stationary, roaming, and mobile (referring to moving frequently, rather than moving occasionally).

The relay forwarding paging indication includes at least one of: a relay forwarding remote UE paging request indication, a relay forwarding remote UE paging indication, and a forwarding paging indication of the connected/paired/associated relay UE.

The information of the relay UE connected/paired/associated with the remote UE includes at least one of: a relay UE identifier, an identifier of a cell serving the relay UE/an identifier of a cell where the relay UE resides, and an identifier of a base station serving the relay UE/an identifier of a base station where the relay UE resides.

The Uu discontinuous reception configuration of the remote UE includes at least one of:
a discontinuous reception period, a long discontinuous reception period, a short discontinuous reception period, and an on-duration.

The discontinuous reception period, the long discontinuous reception period and the short discontinuous reception period are discontinuous reception periods defined by the LTE. The discontinuous reception period is used in the idle state, and the long discontinuous reception period and the short discontinuous reception period are supported in the connection state.

The received remote UE information transmitted by the MME includes at least one of:
an identifier of one or more paged UEs; and
an identifier of one or more paged remote UEs.

For each paged UE, the paging information for paging the remote UE further includes at least one of:
an identifier of a connected/paired/associated remote UE;
a data arrival indication of the connected/paired/associated remote UE; and
a paging forwarding indication of the connected or paired or associated remote UE.

For each paged remote UE, the paging information for paging the remote UE includes at least one of:
an indication for indicating whether the paged remote UE is in no coverage/UE no coverage indication;
an indication for indicating whether the each paged remote UE is in extended coverage/UE extended coverage indication;
a public secure UE indication;
an identifier of a connected/paired/associated remote UE;
an identifier of a cell serving the connected/paired/associated relay UE or an identifier of a cell where the connected/paired/associated relay UE resides;
an identifier of a base station serving the connected/paired/associated relay UE or an identifier of a base station where the connected/paired/associated relay UE resides;
a paging period of the connected/paired/associated relay UE;
a paging forwarding indication; and
a data arrival indication.

In step 702, the base station transmits the paging information for paging the remote UE to the relay UE according to the remote UE information.

The remote UE is in the RRC idle state.

Specifically, the base station determines whether the remote UE needs to be paged according to the remote UE information acquired from the MME or the relay UE. If the remote UE needs to be paged, the base station calculates paging occasion according to forwarding paging UE/UE group identification information, and transmits the information for paging the remote UE to the relay UE at the paging occasion.

In another example, the base station calculates the paging occasion according to a configured forwarding paging period, a forwarding paging frame offset and/or a forwarding paging subframe offset, and transmits the information for paging the remote UE to the relay UE at the paging occasion.

In another example, the base station determines whether the remote UE needs to be paged according to the remote UE information acquired from the MME or the relay UE. If the remote UE needs to be paged, the base station calculates the paging occasion according to an identifier of the relay UE connected/paired/associated with the remote UE and a relay UE paging period, and transmits the information for paging the remote UE to the relay UE at the paging occasion. In another example, the base station acquires the relay UE connected/paired/associated with the paged remote UE according to the remote UE information acquired from the MME or the relay UE, and transmits the information for paging the remote UE to the relay UE.

In the information processing method provided by the embodiments of the present invention, the base station receives the remote UE information; the base station transmits paging information for paging the remote UE to the relay UE according to the remote UE information; the remote UE is in the RRC idle state; the relay UE receives the paging information transmitted by the base station; the relay UE forwards the paging information to the remote UE. When the remote UE is in the RRC idle state, the relay UE forwards the paging information for paging the remote UE. In such a way, the remote UE does not need to be in the RRC connection state in real time, which greatly reduces the energy consumption of the remote UE, thereby implementing the purpose of power saving of the remote UE.

### Embodiment 3

On the basis of the above embodiment 1, the power saving mechanism in the device pass-through system is described in detail in this embodiment.

The UEs described in this embodiment of the present invention are UEs supporting the D2D function.

The application scenario of this embodiment is that John's wearable device UE1 wishes to forward the data through John's smartphone UE2. The UE1 is the remote UE, and the UE2 is the relay UE. It is assumed that both the UE1 and the UE2 are in the network coverage state and are served by the same base station (an evolved node B, eNB). The PC5 connection is established between the UE1 and the UE2. The UE1 forwards the data packet of the UE1 and the data packet of the network through the UE2.

In order to implement the purpose of power saving, the UE1 performs the PC5 discontinuous reception configuration for the UE1 through the base station. As shown in FIG. 8, the specific processing process of the configuration includes the steps 801, 802, 803 and 804 described below. In step 801, the remote UE (the UE1) transmits the remote UE information to the base station. The remote UE information includes at least one of: a remote UE identifier, a remote UE power saving indication, a remote UE type, a remote UE coverage state, a remote UE mobility state, information of the relay UE accessed by the remote UE, and Uu discontinuous reception configuration of the remote UE.

The remote UE identifier includes one or more of:
a ProSe UE identifier, a layer-2 UE identifier, a C-RNTI, an S-TMSI, an IMSI, an eNBX2APID, an eNBS1ARID, and a GUTI.

The remote UE type includes at least one of:
a public secure UE/a non-public secure UE, a UE category, and a bandwidth limited UE/a common UE.

The UE category includes at least one of: category 0, category 1, category M1, and NB-IoT.

The remote UE coverage state is the normal coverage.

The information of the relay UE accessed by the remote UE includes: an identifier of the relay

UE accessed by the remote UE, and an identifier of a cell serving the relay UE.

The Uu discontinuous reception configuration of the remote UE includes: a discontinuous reception period, a long discontinuous reception period, a short discontinuous reception period, and an on-duration.

In step 802, the base station, after receiving the remote UE information transmitted by the remote UE, configures the PC5 discontinuous reception for the remote UE according to the remote UE power saving indication.

Specifically, for the remote UE only with a signal receiver capability, the base station may shift the on-duration of the PC5 discontinuous reception of the remote UE from the on-duration of the discontinuous reception of a Uu interface, so as to avoid the time conflict between Uu downlink reception of the remote UE and the PC5 reception.

In step 803, the base station transmits the PC5 discontinuous reception configuration information to the remote UE.

The PC5 discontinuous reception configuration information includes: a first inactive timer, a discontinuous reception period, an on-duration, a reception resource indication and a connection indication.

The first inactive timer is configured to indicate timing when the remote UE triggers to enter the PC5 discontinuous reception.

The on-duration is configured to indicate a duration of PC5 reception on the remote UE.

Both the discontinuous reception period and the on-duration may be indicated with a unit of the D2D communication reception resource pool period. For example, the D2D communication reception resource pool period is 40 ms, and the discontinuous reception period is configured to be 4, that is, 160 ms. The on-duration is configured to be 1, that is, 40 ms.

The connection indication is configured to indicate that the remote UE needs to maintain the PC5 connection until the remote UE exits the network or until there is no suitable relay UE.

The reception resource indication includes: a D2D communication resource indication, a frame offset and a resource bitmap, and a D2D communication reception resource pool. The resource pool includes: a scheduling control information (SA) pool and/or a data resource pool.

In step 804, the remote UE, after receiving the PC5 discontinuous reception configuration information transmitted by the base station, performs the PC5 discontinuous reception configuration and performs the PC5 discontinuous reception.

Specifically, the remote UE starts the first inactive timer, and re-starts the first inactive timer every time the PC5 data is transmitted and received. When the first inactive timer expires, the remote

UE calculates a starting moment of the on-duration according to the PC5 discontinuous reception configuration and enters the dormant state.

When the on-duration reaches, the remote UE wakes and receives the data transmitted by the relay UE within the on-duration. For example, the D2D communication resource pool period is 40 ms, the discontinuous reception period is 160 ms. Assuming that the frame offset is 0, the remote UE may start to listen to whether there is information to be transmitted to the remote UE in a first D2D communication resource period in each discontinuous reception period. The specific resource which needs to be listened to in the D2D communication resource pool may be determined according to the resource bitmap. The remote UE receives the SA transmitted by the relay UE and the data packet corresponding to the SA within the on-duration. If the identifier contained in the SA and/or the destination identifier of the data packet MAC subhead correspond to the remote UE identifier, the remote UE receives the data packet to perform the subsequent access sub-stratum (AS) parsing, and delivers the data packet to a higher layer for further processing. If the remote UE fails to detect the data transmitted to the remote UE within the on-duration, or if the remote UE finishes data reception within the on-duration without subsequent data transmission, the remote UE enters the dormant state.

In the practical application, in order to make sure that the relay UE (the UE2) transmits the data to the remote UE only within the on-duration of the PC5 discontinuous reception, the base station also needs to transmit the PC5 discontinuous reception configuration information of the remote UE to the relay UE. The configuration information may contain: the remote UE identifier, PC5 discontinuous reception configuration information similar to the PC5 discontinuous reception configuration information of the remote UE.

After receiving the PC5 discontinuous reception configuration information of the remote UE, the relay UE calculates an on-duration position according to the PC5 discontinuous reception configuration information of the remote UE, and transmits the discovery information or data corresponding to the remote UE within the on-duration.

In the manner described above, the remote UE implements the discontinuous PC5 reception, and does not need to listen to a PC5 link, thereby implementing the purpose of power saving of the remote UE.

### Embodiment 4

On the basis of the above embodiment 1, the power saving mechanism in the device pass-through system is described in detail in this embodiment.

The application scenario of this embodiment is that an officer Ais the UE1 with the D2D function, and an officer B is the UE2 with the D2D function. The UE1 is in the network coverage state, and the UE2 is in the state with no network coverage. The UE1 in the network coverage has a relay capability, and may provide a relay forwarding service for other UEs (such as the UE2) nearby. The direct connection (the PC5 connection) is established between the UE1 and the UE2. The UE1 forwards the data, which is transmitted between the UE1 and the network, to the UE2. At this time, the UE1 is the relay UE, and the UE2 is the remote UE.

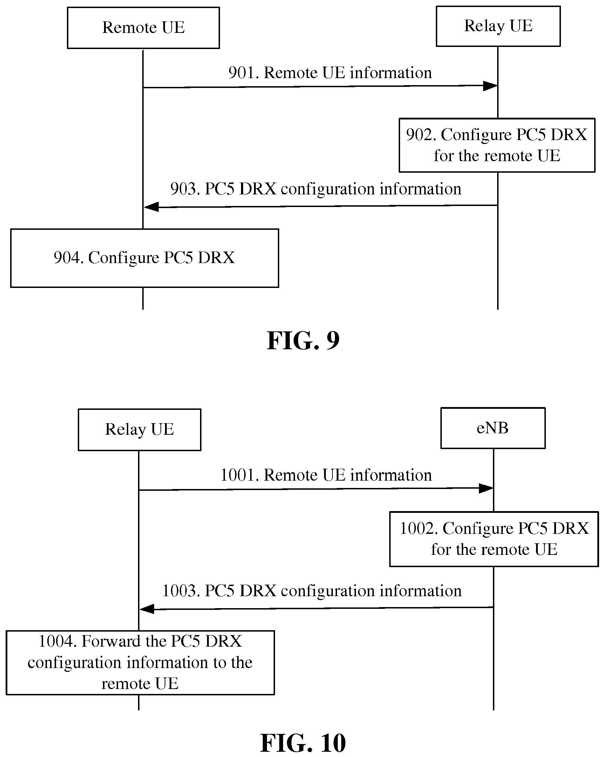

In order to implement the purpose of power saving, the UE1 performs the PC5 discontinuous reception configuration for the UE1 through the UE2. As shown in FIG. 9, the specific processing process of the configuration includes the steps 901, 902, 903 and 904 described below.

In step 901, the remote UE (the UE1) transmits the remote UE information (UE1 information) to the relay UE (the UE2).

The remote UE information includes at least one of: a remote UE identifier, a remote UE power saving indication, a remote UE type, a remote UE coverage state, a remote UE mobility state, and Uu discontinuous reception configuration of the remote UE.

The remote UE identifier includes one or more of: a ProSe UE identifier, a layer-2 UE identifier, a C-RNTI, an S-TMSI, an IMSI, an eNBX2APID, an eNBS1APID, and a GUTI.

The remote UE type includes at least one of: a public secure UE/a non-public secure UE, a UE category, and a bandwidth limited UE/a common UE.

The UE category includes at least one of: category 0, category 1, category M1, and NB-IoT. The remote UE coverage state is the state with no coverage, and the remote UE mobility state is a roaming state.

The Uu discontinuous reception configuration of the remote UE includes: a discontinuous reception period, a long discontinuous reception period, a short discontinuous reception period, and an on-duration.

In step 902, the relay UE, after receiving the remote UE information transmitted by the remote UE, configures the PC5 discontinuous reception for the UE according to the remote UE power saving indication.

The specific implementation of the step 902 is similar to the specific implementation of the step 802.

In step 903, the relay UE transmits the PC5 discontinuous reception configuration information to the remote UE.

The PC5 discontinuous reception configuration information includes: a first inactive timer, a second inactive timer, a discontinuous reception period, an on-duration, a reception resource indication and a connection indication.

The first inactive timer is configured to indicate timing when the remote UE triggers to enter the PC5 discontinuous reception.

The second inactive timer is configured to indicate timing when the remote UE triggers to release the PC5 connection.

The on-duration is configured to indicate a duration of PC5 reception on the remote UE.

The discontinuous reception period and the on-duration may be represented in milliseconds. For example, the D2D communication reception resource pool period is 40 ms, and the discontinuous reception period is configured to be 800, that is, 800 ms. The on-duration is configured to be 80, that is, 80 ms.

The connection indication is configured to indicate that the remote UE does not need to maintain the PC5 connection, and may release the PC5 connection when there is no data transmission for a long time.

The reception resource indication includes: a D2D communication resource indication, a frame offset and a resource pattern, and a D2D communication reception resource pool. The resource pool includes: an SA resource pool and/or a data resource pool.

In step 904, the remote UE, after receiving the PC5 discontinuous reception configuration information transmitted by the relay UE, performs the PC5 discontinuous reception configuration and performs the PC5 discontinuous reception.

Specifically, the remote UE starts the first inactive timer and the second inactive timer, and re-starts these timers every time the PC5 data is transmitted and received. When the first inactive timer expires, the remote UE calculates a starting moment of the on-duration according to the PC5 discontinuous reception configuration and enters the dormant state.

When the on-duration reaches, the remote UE wakes and receives the data transmitted by the relay UE within the on-duration. For example, the D2D communication resource pool period is 40 ms, and the discontinuous reception period is 800 ms. Assuming that the frame offset is 160, the remote UE may start to listen to whether there is information to be transmitted to the remote UE in two consecutive resource periods starting from the fourth D2D communication resource period in each discontinuous reception period. The specific resource which needs to be listened to in the D2D communication resource pool may be determined according to the resource pattern mapping. The remote UE receives the SA transmitted by the relay UE and the data packet corresponding to the SA within the on-duration. If the identifier contained in the SA and/or the destination identifier of the data packet MAC subhead correspond to the remote UE identifier, the remote UE receives the data packet to perform the subsequent AS parsing, and delivers the data packet to a higher layer for further processing. If the remote UE fails to detect the data transmitted to the remote UE within the on-duration, or if the remote UE finishes data reception within the on-duration without subsequent data transmission, the remote UE enters the dormant state.

In addition, when the second inactive timer expires, the remote UE initiates to release the PC5 connection between the remote UE and the relay UE.

In the practical application, in order to make sure that the relay UE transmits the data to the remote UE only within the on-duration of the PC5 discontinuous reception, the relay UE, after transmitting the PC5 discontinuous reception configuration to the remote UE, also needs to calculate the on-duration position according to the PC5 discontinuous reception configuration of the remote UE, and transmit the discovery information or data corresponding to the remote UE within the on-duration.

In the manner described above, the remote UE implements the discontinuous PC5 reception, and does not need to listen to a PC5 link, thereby implementing the purpose of power saving of the remote UE.

It is to be noted that the above embodiment is not limited to the discontinuous reception configuration between the remote UE and the relay UE. For the common D2D communication scenario, the UE1 and its peer, the UE2, may adopt the manner described above to perform the discontinuous connection and perform the discontinuous reception. thereby implementing the purpose of power saving.

### Embodiment 5

On the basis of the above embodiment 1, the power saving mechanism in the device pass-through system is described in detail in this embodiment.

In the IoT, a large number of IoT devices such as smart meters and water meters are deployed in residential areas and business districts. These IoT devices usually have low power consumption, long standby time, static deployment, and low data rate requirements. Their services are mainly to report the utilization state of electricity/water/gas in autonomous cycle in days or in months, and sometimes report some abnormal notifications, such as power cut and alarms. Considering that these IoT devices are usually in the extended coverage state within a building, their communication and the service data interaction with the base station often requires multiple iterations of data transmission. For IoT, the repeated data transmission or data reception consumes a lot of electricity. In order to solve the electricity consumption problem, some relay UEs may be installed in a region with better cellular signals to provide data forwarding function for the IoT UEs in the extended coverage, thereby reducing the number of repeated data transmission.

In view of this, the application scenario of this embodiment is that a meter A is the UE1 with the D2D function, and a meter B is the UE2 with the D2D function. The UE1 and the UE2 are in the extended coverage state. The UE3 with better cellular signals is installed near the meter A and the meter B. The UE3 in the network coverage has the relay capability, and may provide the relay forwarding service for other UEs nearby. Assuming that the direct connection is respectively established between the UE1 and the UE3 and between the UE2 and the UE3, and the UE3 respectively forwards the data transmission between the UE3 and the UE1 and the data transmission between the UE3 and the UE2, at this time, the UE1 and the UE2 are the remote UEs, and the UE3 is the relay UE.

In order to implement the purpose of power saving, the UE1 and the UE2 perform the PC5 discontinuous reception configuration by the base station for the UE1 and the UE2 through the relaying of the relay UE. As shown in FIG. 10, the specific processing process of the configuration includes the steps 1001, 1002, 1003 and 1004 described below.

In step 1001, the relay UE transmits the remote UE information to the base station.

The remote UE information includes at least one of: a remote UE identifier list, a remote UE power saving indication, a remote UE type, a remote UE coverage state, a remote UE mobility state, a relay forwarding paging indication, and Uu discontinuous reception configuration of the remote UE.

The remote UE identifier includes one or more of: a ProSe UE identifier, a layer-2 UE identifier, a C-RNTI, an S-TMSI, an IMSI, an eNBX2APID, an eNBS1APID, and a GUTI.

The remote UE type includes at least one of: a public secure UE/a non-public secure UE, a UE category, and a bandwidth limited UE/a common UE.

The UE category further includes at least one of: category 0, category 1, category M1, and NB-IoT.

The remote UE coverage state is the state with no coverage, and the remote UE mobility state is a stationary state.

The relay forwarding paging indication is configured to indicate that the relay UE needs to forward remote UE paging.

The Uu discontinuous reception configuration of the remote UE includes: a discontinuous reception period, a long discontinuous reception period, a short discontinuous reception period, and an on-duration.

In step 1002, the base station, after receiving the remote UE information transmitted by the relay UE, issues the PC5 discontinuous reception configuration to the relay UE according to the remote UE power saving indication.

The specific implementation of the step 1002 is similar to the specific implementation of the step 802.

In step 1003, the base station transmits the PC5 discontinuous reception configuration information to the relay UE.

The PC5 discontinuous reception configuration information includes: a second inactive timer, a discontinuous reception period, an on-duration, and a reception resource indication.

The second inactive timer is configured to indicate timing when the remote UE triggers to release the PC5 connection.

The on-duration is configured to indicate a duration of PC5 reception on the remote UE.

The discontinuous reception period and the on-duration may be represented in milliseconds. For example, the D2D discovery reception resource pool period is 40 ms, and the discontinuous reception period is configured to be 1000, that is, 40 s. The on-duration is configured to be 80, that is, 80 ms.

The reception resource indication includes: a D2D discovery resource indication, a frame offset and a resource pattern, and a D2D discovery reception resource pool.

In step 1004, the relay UE, after receiving the PC5 discontinuous reception configuration transmitted by the base station, transmits the configuration information corresponding to the PC5 discontinuous reception configuration to the remote UE nearby.

The remote UE, after receiving the PC5 discontinuous reception configuration information transmitted by the relay UE, performs the PC5 discontinuous reception configuration and performs the PC5 discontinuous reception.

Specifically, the remote UE starts the second inactive timer, and re-starts the first inactive timer every time the PC5 data is transmitted and received. When the second inactive timer expires, the remote UE initiates to release the PC5 connection and enters the dormant state.

When the paging occasion reaches, the remote UE wakes and receives the paging information transmitted by the relay UE within the on-duration. For example, the D2D discovery resource pool period is 40 ms, the discontinuous reception period is 80 s, and the frame offset of the resource pool is 160. The remote UE calculates the number of subframes containing the D2D discovery resource in each D2D discovery resource period. For example, if the number of subframes is 20, the number of subframes containing the D2D discovery resource within one on-duration is 40. The remote UE uses modulo of the number of D2D discovery resource subframes contained within an on-duration of the remote UE identifier, so as to acquire a corresponding subframe containing the D2D discovery resource. In this subframe, the remote UE listens to whether there is paging information for paging the remote UE transmitted through the D2D discovery. If the paging information is detected, the remote UE initiates the service request procedure, and re-accesses the network. If the remote UE fails to detect the data transmitted to the remote UE within the on-duration, the remote UE enters the dormant state.

In order to make sure that the relay UE transmits the paging information to the remote UE only within the on-duration of the PC5 discontinuous reception, the relay UE, after transmitting the PC5 discontinuous reception configuration to the remote UE, needs to listen to the paging information transmitted by the base station. If the relay UE detects the paging for the remote UE, the relay UE calculates the on-duration position according to PC5 discontinuous reception configuration of the remote UE and transmits the paging information corresponding to the remote UE within the on-duration.

In the manner described above, the remote UE implements the discontinuous PC5 reception, and does not need to listen to a PC5 link, thereby implementing the purpose of power saving of the remote UE.

### Embodiment 6

In the IoT, a large number of IoT devices such as smart meters and water meters are deployed in residential areas and business districts. These IoT devices usually have low power consumption, long standby time, static deployment, and low data rate requirements. Their services are mainly to report the use state of electricity/water/gas in autonomous cycle in days or in months, and sometimes report some abnormal notifications, such as power cut and alarms. Considering that these IoT devices are usually in the extended coverage state within the building, their communication and the service data interaction with the base station often requires multiple iterations of data transmission. For IoT, the repeated data transmission or data reception consumes a lot of electricity. In order to solve the electricity consumption problem, some relay UEs may be installed in a region with better cellular signals to provide data forwarding function for the IoT UEs in the extended coverage, thereby reducing the number of repeated data transmission.

In view of this, the application scenario of this embodiment is that the meter A is the UE1 with the D2D function, and the meter B is the UE2 with the D2D function. The UE1 and the UE2 are in the extended coverage state. The UE3 with better cellular signals is installed near the meter A and the meter B. The UE3 in the network coverage has the relay capability, and may provide the relay forwarding service for other UEs nearby. Assuming that the direct connection is respectively established between the UE1 and the UE3 and between the UE2 and the UE3, and the UE3 respectively forwards the data transmission between the UE3 and the UE1 and the data transmission between the UE3 and the UE2, at this time, the UE1 and the UE2 are the remote UEs, and the UE3 is the relay UE.

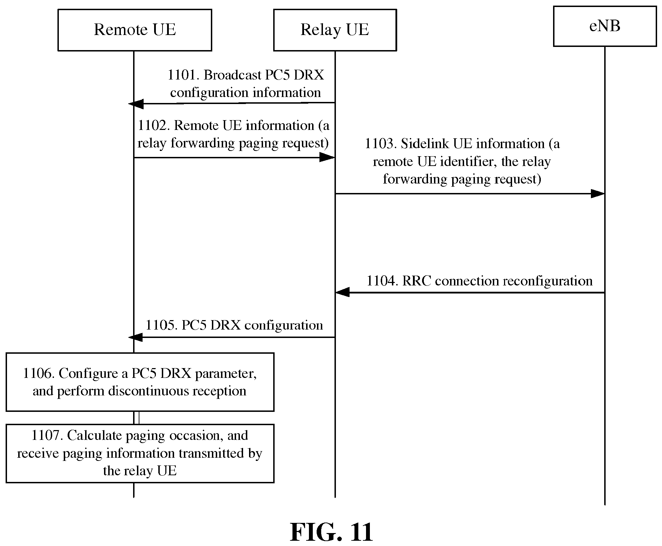

In order to implement the purpose of power saving, the remote UE requests the relay UE to forward a paging message. As shown in FIG. 11, the process includes the steps described below. In step 1101, the relay UE broadcasts the PC5 discontinuous reception configuration information. The manner of broadcasting may be that the relay UE broadcasts the system information containing a relay paging indication or a relay supporting paging forwarding.

In addition, the relay UE may further broadcast the reception resource indication. The reception resource indication includes: a D2D discovery/D2D communication resource indication, a frame offset, a subframe offset, a resource pattern/bitmap, and a D2D communication reception resource pool.

The D2D communication reception resource pool may include: an SA resource pool and/or a data resource pool.

In step 1102, the remote UE, after receiving the PC5 discontinuous reception configuration information broadcasted by the relay UE, discovers that the relay UE is able to support the paging forwarding for the remote UE, and the remote UE transmits the remote UE information to the relay UE.

The remote UE information may include: remote UE identification information, a remote UE mobility state, and a relay forwarding paging indication.

The remote UE identification includes one or more of: a layer-2 UE identifier, a C-RNTI, an S-TMSI, and an IMSI.

The relay forwarding paging indication is configured to indicate that the remote UE requests the relay UE to forward the paging for the remote UE.

In step 1103, the relay UE, after receiving the remote UE information transmitted by the remote UE, transmits the remote UE information to the base station, to indicate the base station that the remote UE wants the relay UE to forward the paging information for the remote UE.

In step 1104, the base station, after receiving the remote UE information, stores the paging information for the remote UE as a context of the relay UE, and the base station transmits RRC connection reconfiguration information to the relay UE.

It is assumed that the base station supports the relay UE to forward the paging information of the remote UE.

The RRC connection reconfiguration information may contain and use information related to the PC5 discontinuous reception configuration for the remote UE to receive the paging information subsequently.

In step 1105, the relay UE, after receiving the RRC connection reconfiguration information, transmits the PC5 discontinuous reception configuration information to the remote UE through specific signaling.

The PC5 discontinuous reception configuration information transmitted to the remote UE is used for the UE to listen to the paging information forwarded by the relay UE subsequently.

In step 1106, the remote UE, after receiving the PC5 discontinuous reception configuration information transmitted by the relay UE, performs the PC5 discontinuous reception configuration and performs the PC5 discontinuous reception.

Assuming that subsequently the remote UE does not transmit or receive any data packet for a long time, the base station triggers to release S1 and RRC connections of the remote UE. The corresponding remote UE enters the RRC idle state, but the remote UE still maintains the PC5 connection with the relay UE. Assuming that at this time, the PGW/ SGW receives downlink data transmitted to the remote UE, the MME may be triggered to initiate to page the remote UE. At this time, the base station receives the information for paging the remote UE transmitted by the MME, and the base station discovers that the information of the remote UE will be forwarded by the relay UE according to the maintained context of the relay UE. The base station calculates the paging occasion according to the relay UE identifier corresponding to the remote UE and the paging period, and transmits the paging information containing the remote UE identifier at the paging occasion corresponding to the relay UE.

In step 1107, the remote UE, after receiving the specific PC5 discontinuous reception configuration information transmitted by the relay UE, calculates the paging occasion and receives the paging information transmitted by the relay UE at the paging occasion.

The specific PC5 discontinuous reception configuration refers to a specific configuration parameter for the UE. For example, the discontinuous reception (DRX) period may have a different value configured for each UE, or may be the same value configured for all UEs in a cell. Specifically, the remote UE receives the SA transmitted by the relay UE and the data packet corresponding to the SA. If the identifier contained in the SA and/or the destination identifier of the data packet MAC subhead correspond to the remote UE identifier, and the data packet contains the paging indication, the remote UE is paged and initiates the service request procedure. Otherwise the remote UE enters the dormant state.

In the manner described above, the remote UE implements the discontinuous PC5 reception, and does not need to listen to a PC5 link, thereby implementing the purpose of power saving of the remote UE.

### Embodiment 7

This embodiment is not covered by the claims.

On the basis of the above embodiment 2, the power saving mechanism in the device pass-through system when the remote UE is in the idle state is described in detail in this embodiment.

The application scenario of this embodiment is that the officer Ais the UE1 with the D2D function, and the officer B is the UE2 with the D2D function. The UE1 is in the network coverage state, and the UE2 is in the state with no network coverage. The UE1 in the network coverage has the relay capability, and may provide a relay forwarding service for other UEs nearby. The direct connection is established between the UE1 and the UE2. The UE1 forwards the data transmission between the UE1 and the network for the UE2. At this time, the UE1 is the relay UE, and the UE2 is the remote UE.

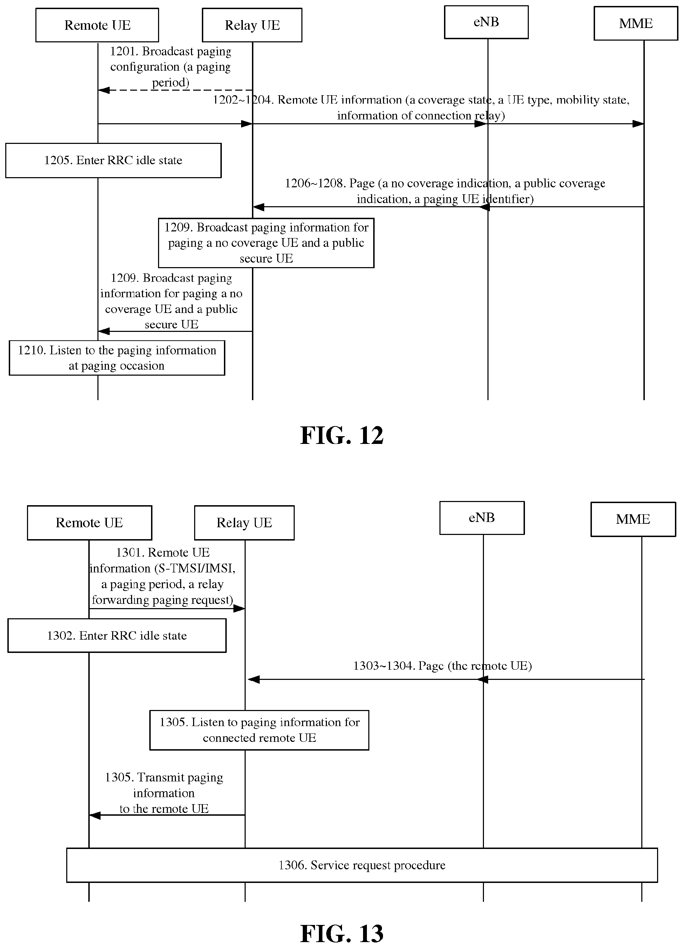

In order to implement the purpose of power saving, the remote UE requests the relay UE to forward a paging message. As shown in FIG. 12, the process includes the steps described below. In step 1201, the relay UE broadcasts the PC5 discontinuous reception configuration information. The manner of broadcasting may be that the relay UE broadcasts the system information containing the relay paging indication, a relay supporting paging forwarding, a paging period and a paging group identifier indication.

The paging group identifier indication is configured to indicate the destination layer-2 identifier for transmitting the paging information.

In addition, the relay UE may further broadcast the reception resource indication. The reception resource indication includes: a D2D discovery/D2D communication resource indication, a frame offset, a subframe offset, a resource pattern/bitmap, and a D2D communication reception resource pool.

The D2D communication reception resource pool may include: an SA resource pool and/or a data resource pool.

In step 1202, the remote UE, after receiving the discontinuous reception configuration information broadcasted by the relay UE, discovers that the relay UE is able to support the paging forwarding for the remote UE, and the remote UE transmits the remote UE information to the relay UE.

The remote UE information includes at least one of: remote UE identification information, a remote UE power saving indication, a remote UE type, a remote UE coverage state, a remote UE mobility state, information of the relay UE accessed/paired/associated the remote UE, Uu discontinuous reception configuration of the remote UE, and a relay forwarding paging indication. The remote UE identifier includes one or more of: a ProSe UE identifier, a layer-2 UE identifier, a C-RNTI, an S-TMSI, and an IMSI.

The remote UE type indicates that the remote UE is the public secure UE.

The remote UE coverage state is the state with no coverage. The remote UE mobility state is the roaming state.

The Uu discontinuous reception configuration of the remote UE includes: a discontinuous reception period, a long discontinuous reception period, a short discontinuous reception period, and an on-duration.

The relay forwarding paging indication is configured to indicate that the remote UE requests the relay UE to forward the paging for the remote UE.

In step 1203, the relay UE, after receiving the remote UE information transmitted by the remote UE, transmits the remote UE information to the base station.

The remote UE information transmitted to the base station includes at least one of: a remote UE type, a remote UE coverage state, a remote UE mobility state, information of the relay UE accessed/paired/associated the remote UE, and a relay forwarding paging indication.

In step 1204, the base station, after receiving the remote UE information, transmits the received remote UE information to the MME for storing.

In step 1205, when the remote UE does not transmit or receive any data packet for a long time, the base station triggers to release S 1 and RRC connections of the remote UE. The corresponding remote UE enters the RRC idle state, but the remote UE still maintains the PC5 connection with the relay UE.

In step 1206, the PGW/ SGW receives downlink data transmitted to the remote UE, and the MME may be triggered to initiate to page the remote UE.

In step 1207, the base station receives the paging information transmitted by the MME.

The remote UE paging information transmitted by the MME includes an identifier of one or more paged UEs. The remote UE may include following: a UE no coverage indication, a public secure UE indication, identification information of the relay UE accessed/paired/associated the remote UE, a relay UE paging period, a paging forwarding indication, and a data arrival indication.

In step 1208, the base station transmits the paging information containing the remote UE identifier according to the paging information acquired from the MME.

The base station may calculate paging occasion according to forwarding paging UE information/UE group identification information pre-configured by the system, so as to transmit the paging information containing the remote UE identifier.

In another example, the base station may calculate the paging occasion for forwarding and paging the remote UE according to a forwarding paging period, a forwarding paging frame offset and/or a forwarding paging subframe offset configured by the system and broadcasted through the system information, so as to transmit the paging information containing the remote UE identifier. In step 1209, the relay UE having a forwarding paging capability calculates the paging occasion according to forwarding paging configuration, and listens to the paging information to be transmitted. If the relay UE listens to the paging information, the relay UE forwards the corresponding paging information on the PC5 interface.

The relay UE listens to the paging information transmitted in all paging occasion, and determines whether the relay UE needs to forward the corresponding paging information according to whether the UE contained in the paging information is in the state with no coverage, and whether the LTE is the public secure LTE indication, the paging forwarding indication or the identification information of the accessed/paired/associated relay UE. If the UE is in the state with no coverage, or the UE is the public secure UE, or the UE receives the paging forwarding indication, and the relay UE accessed/paired/associated by the UE corresponds to the UE, the relay UE forwards the paging information of the remote UE.

In the practical application, the relay UE may acquire the forwarding paging configuration in the manner of base station broadcast or in a system default manner. The forwarding paging configuration mainly includes:
forwarding paging UE/UE group identification information;
a forwarding paging period; and
a frame offset and/or a subframe offset corresponding to forwarding paging occasion.

In step 1210, the remote UE, after receiving the discontinuous reception configuration transmitted by the relay UE, calculates the paging occasion and receives the paging information transmitted by the relay UE at the paging occasion.

Specifically, the remote UE receives the SA transmitted by the relay UE and the data corresponding to the SA. If the identifier contained in the SA and/or the destination identifier of the data packet MAC subhead correspond to the paging group identifier, the remote UE determines that the data packet is the paging information. Furthermore, the remote UE determines whether the paging information contains the remote UE identifier. If the paging information contains the remote UE identifier, the remote UE is paged and initiates the service request procedure. Otherwise the remote UE enters the dormant state.

In the manner described above, the remote UE implements the PC5 discontinuous reception, and does not need to listen to a PC5 link, thereby implementing the purpose of power saving of the remote UE.

### Embodiment 8

This embodiment is not covered by the claims.

On the basis of the above embodiment 2, the power saving mechanism in the device pass-through system when the remote UE is in the idle state is described in detail in this embodiment.

The UEs described in this embodiment of the present invention are UEs for supporting the D2D function.

The application scenario of this embodiment is that John's wearable device UE1 wishes to forward the data through John's smartphone UE2. The UE1 is the remote UE, and the UE2 is the relay UE. It is assumed that the remote UE accesses the relay UE through wireless local area networks (WLAN) and does not access the cellular network. The relay UE is in the network coverage state, access the network. Although the remote UE does not directly interact with the base station, RRC signaling and the data of the remote UE may be transmitted to the relay UE through WLAN, and transmitted to the network through the relay UE.

In order to implement the purpose of power saving, the relay UE listens to the paging information of the remote UE according to the request of the remote UE and transmits the paging information to the remote UE. As shown in FIG. 13, the process includes the steps described below.

In step 1301, the remote UE transmits the remote UE information to the relay UE.

The remote UE information may include: remote UE identification information, a remote UE power saving indication, a paging period of the remote UE, and a relay forwarding paging indication.

The remote UE identifier includes one or more of: a ProSe UE identifier, a layer-2 UE identifier, a C-RNTI, an S-TMSI, and an IMSI.

The relay forwarding paging indication indicates that the remote UE requests the relay UE to forward the paging for the remote UE.

In step 1302, when the remote UE does not transmit or receive any data packet for a long time, the base station triggers to release S 1 and RRC connections of the remote UE. The corresponding remote UE enters the RRC idle state, but the remote UE still maintains the WLAN connection with the relay UE.

In step 1303, the PGW/ SGW receives downlink data transmitted to the remote UE, and the MME may be triggered to initiate to page the remote UE.

In step 1304, the base station receives the paging information transmitted by the MME, and transmits the paging information on an air interface.

In step 1305, the relay UE having the forwarding paging capability calculates the possible paging occasion of the remote UE according to the remote UE identifier and the paging period, and listens to the paging information of the remote UE at the paging occasion. If the relay UE listens to the paging information, the relay UE transmits the paging information to the remote UE on a WLAN interface.

In step 1306, the remote UE receives the WLAN/BT data transmitted by the relay UE, and parses whether the WLAN/BT data contains the information for paging the remote UE. If the WLAN/BT data contains the information for paging the remote UE, the remote UE is paged and initiates the service request procedure. Otherwise the remote UE enters the dormant state.

The paging information is transmitted through a WLAN/BT interface, so the date received by the remote UE is the WLAN/BT data.

In addition, the remote UE, before releasing the RRC connection with the base station, transmits to the base station a identifier of the relay UE connected/paired/associated with the remote UE, and/or an identifier of a cell serving the relay UE/an identifier of a cell where the relay UE resides, or information of a serving base station of the relay UE, and a relay forwarding paging indication. After the RRC connection of the remote UE is released, the base station releases the identifier of the relay UE connected/paired/associated with the remote UE, and/or the identifier of the cell serving the relay UE/the identifier of the cell where the relay UE resides, or information of the serving base station of the relay UE, and the relay forwarding paging indication to a UE context transmitted by the MME. When the downlink data of the remote UE arrives, if the relay UE connected/paired/associated with the remote UE is in the RRC connection state, the MME may directly transmit the information for paging the remote UE to the serving cell/the base station of the relay UE connected with the remote UE. The base station, after receiving the information for paging the remote UE, transmits information indicating the remote UE data arrival to the relay UE. The relay UE, after receiving the information indicating the remote UE data arrival, transmits the information indicating the remote UE data arrival to the remote UE through PC5/WLAN/BT. In addition, when the downlink data of the remote UE arrives, if the relay UE connected/paired/associated with the remote UE is in the RRC idle state, the MME may page the relay UE connected/paired/associated with the remote UE by using a conventional paging procedure. The paging information for paging the relay UE may further include an identifier of the remote UE connected/paired/associated with the relay UE, a remote UE data arrival indication and a remote UE paging forwarding indication. The base station, after receiving the paging information for paging the relay UE, transmits the paging information for paging the relay UE at the paging occasion corresponding to the relay UE. The paging information for paging the relay UE further includes the identifier of the remote UE connected/paired/associated with the relay UE, the remote UE data arrival indication and the remote UE paging forwarding indication. The relay UE, after receiving the paging information for paging the relay UE, transmits the information indicating the remote UE data arrival to the remote UE through PC5/WLAN/BT.

In the manner described above, the remote UE implements the discontinuous reception, and does not need to maintain the RRC connection state, thereby implementing the purpose of power saving of the remote UE.

### Embodiment 9

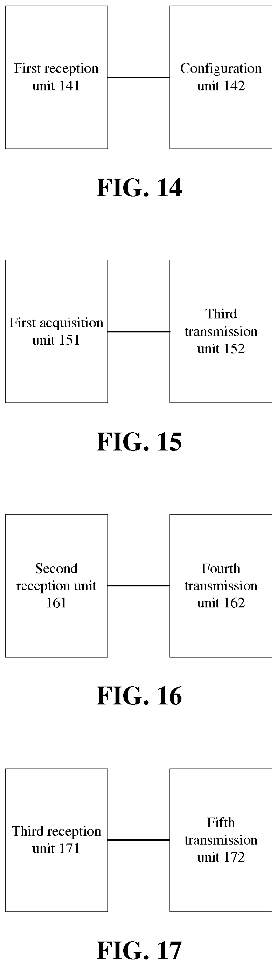

In order to implement the method described in the embodiment 1, an embodiment of the present invention provides an information processing apparatus. The apparatus is applied to a remote UE and, as shown in FIG. 14, includes a first reception unit 141 and a configuration unit 142.

The first reception unit 141 is configured to receive PC5 discontinuous reception configuration information.

The configuration unit 142 is configured to perform PC5 discontinuous reception configuration and perform PC5 discontinuous reception based on the PC5 discontinuous reception configuration information.

The apparatus may further include a first transmission unit.

The first transmission unit is configured to, when the received PC5 discontinuous reception configuration information is configured by the base station, transmit remote UE information to a base station or transmit the remote UE information to the base station through a relay UE.

The apparatus may further include a second transmission unit.

The second transmission unit is configured to, when the received PC5 discontinuous reception configuration information is configured by the relay UE, directly transmit remote UE information to the relay UE.

It is to be understood by those skilled in the art that implementation of functions of various units of the UE shown in FIG. 14 may be understood with reference to the description of the foregoing information processing process of the remote UE.

In practical applications, the first reception unit 141, the first transmission unit and the second transmission unit may all be implemented by a communicator (which may be understood as a communication interface or a network interface) located in the information processing apparatus; the configuration unit 142 may be implemented by a central processing unit (CPU), a micro processing unit (MPU), a digital signal processor (DSP), a field programmable gate array (FPGA) or the like located in the remote UE.

In order to implement the method described in the embodiment 1, an embodiment of the present invention provides an information processing apparatus. The apparatus is applied to a relay UE and, as shown in FIG. 15, includes a first acquisition unit 151 and a third transmission unit 152. The first acquisition unit 151 is configured to acquire PC5 discontinuous reception configuration information of a remote UE.

The third transmission unit 152 is configured to perform PC5 transmission based on the PC5 discontinuous reception configuration information.

The third transmission unit 152 is specifically configured to:
acquire paging occasion according to the discontinuous reception configuration information, and transmit paging information corresponding to the remote UE at the paging occasion; and/or
acquire an on-duration according to the PC5 discontinuous reception configuration information, and transmit discovery information or data corresponding to the remote UE within the on-duration.

It is to be understood by those skilled in the art that implementation of functions of various units of the UE shown in FIG. 15 may be understood with reference to the description of the foregoing information processing process of the relay UE.

In practical applications, the first acquisition unit 151 and the third transmission unit 152 may all be implemented by a CPU, an MPU, a DSP, or an FPGA combined with a communicator (which may be understood as a communication interface or a network interface).

### Embodiment 10

This embodiment is not covered by the claims.

In order to implement the method described in the embodiment 2, an embodiment of the present invention provides an information processing apparatus. The apparatus is applied to a relay UE and, as shown in FIG. 16, includes a second reception unit 161 and a fourth transmission unit 162. The second reception unit 161 is configured to receive paging information transmitted by a base station.

The fourth transmission unit 162 is configured to transmit the paging information to a remote UE. The remote UE is in an RRC idle state.

The second reception unit 161 is further configured to, before receiving the paging information transmitted by the base station, receive remote UE information transmitted by the remote UE. In an embodiment, the apparatus may further include a second acquisition unit.

The second acquisition unit is configured to, before receiving the paging information transmitted by the base station, acquire forwarding paging resource configuration.

It is to be understood by those skilled in the art that implementation of functions of various units of the UE shown in FIG. 16 may be understood with reference to the description of the foregoing information processing process of the relay UE.

In practical applications, the second reception unit 161, the fourth transmission unit 162 and the second acquisition unit may all be implemented by a CPU, an MPU, a DSP, or an FPGA combined with a communicator (which may be understood as a communication interface or a network interface).

In order to implement the method described in the embodiment 2, an embodiment of the present invention provides an information processing apparatus. The apparatus is applied to a base station and, as shown in FIG. 17, includes a third reception unit 171 and a fifth transmission unit 172. The third reception unit 171 is configured to receive remote UE information.

The fifth transmission unit 172 is configured to transmit paging information for paging a remote UE.

The remote UE is in an RRC idle state.

The fifth transmission unit 172 is specifically configured to:
determine whether the remote UE needs to be paged according to remote UE information acquired from an MME or the relay UE, and if the remote UE needs to be paged, calculate paging occasion according to forwarding paging UE/UE group identification information, and transmit information for paging the remote UE at the paging occasion; or
calculate the paging occasion according to a configured forwarding paging period, a forwarding paging frame offset and/or a forwarding paging subframe offset, and transmit the information for paging the remote UE at the paging occasion; or
determine whether the remote UE needs to be paged according to the remote UE information acquired from the MME or the relay UE, and if the remote UE needs to be paged, calculate the paging occasion according to an identifier of the relay UE connected/paired/associated with the remote UE and a relay UE paging period, and transmit the information for paging the remote UE at the paging occasion; or
according to the remote UE information acquired from the MME or the relay UE, acquire the relay UE connected/paired/associated with the paged remote UE, and transmit the information for paging the remote UE to the relay UE.

It is to be understood by those skilled in the art that implementation of functions of various units of the base station shown in FIG. 17 may be understood with reference to the description of the foregoing information processing process of the base station.

In practical applications, the third reception unit 171 may be implemented in a receiver in the base station. The fifth transmission unit 172 may be implemented by a CPU, an MPU, a DSP, or an FPGA combined with a communicator (which may be understood as a communication interface or a network interface).

### Embodiment 11

This embodiment is not covered by the claims.

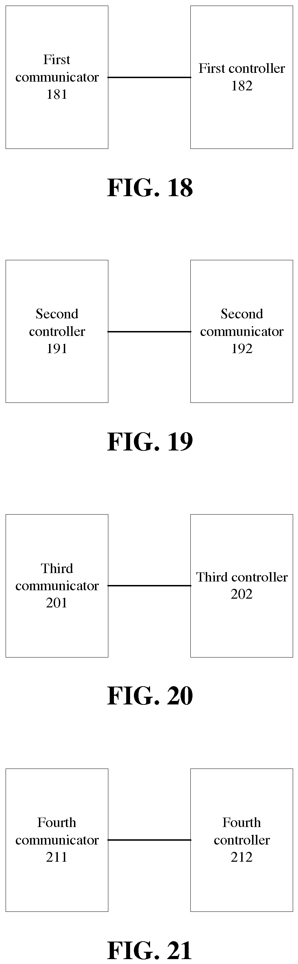

In order to implement the method described in the embodiment 1, an embodiment of the present invention provides a remote UE. As shown in FIG. 18, the remote UE includes a first communicator 181 and a first controller 182.

The first communicator 181 is configured to receive PC5 discontinuous reception configuration information.

The first controller 182 is configured to perform PC5 discontinuous reception configuration and perform PC5 discontinuous reception through the first communicator 181.

The first communicator 181 is further configured to, when the received PC5 discontinuous reception configuration information is configured by the base station, transmit remote UE information to the base station or transmit the remote UE information to the base station through the relay UE.

In an embodiment, the first communicator 181 is further configured to, when the received PC5 discontinuous reception configuration information is configured by the relay UE, transmit the remote UE information to the relay UE.

It is to be noted that it is to be understood by those skilled in the art that implementation of functions of various hardware devices in the remote UE may be understood with reference to the description of the foregoing information processing process of the remote UE.

In order to implement the method described in the embodiment 1, an embodiment of the present invention provides a relay UE. As shown in FIG. 19, the relay UE includes a second communicator 191 and a second controller 192.

The second controller 191 is configured to acquire PC5 discontinuous reception configuration information of a remote UE.

The second controller 192 is configured to perform PC5 transmission based on the PC5 discontinuous reception configuration information.

The second communicator 192 is specifically configured to:
acquire paging occasion according to the discontinuous reception configuration information, and
transmit paging information corresponding to the remote UE at the paging occasion; and/or
acquire an on-duration according to the PC5 discontinuous reception configuration information, and transmit discovery information or data corresponding to the remote UE within the on-duration.

It is to be noted that it is to be understood by those skilled in the art that implementation of functions of various hardware devices in the relay UE may be understood with reference to the description of the foregoing information processing process of the relay UE.

### Embodiment 12

This embodiment is not covered by the claims.

In order to implement the method described in the embodiment 2, an embodiment of the present invention provides a relay UE. As shown in FIG. 20, the relay UE includes a third communicator 201 and a third controller 202.

The third communicator 201 is configured to receive paging information transmitted by a base station, and transmit the paging information to a remote UE under the control of the third controller 202.

The third communicator 201 is further configured to, before receiving the paging information transmitted by the base station, receive the remote UE information transmitted by the remote UE. In an embodiment, the third controller 202 is configured to, before receiving the paging information transmitted by the base station, acquire forwarding paging resource configuration.

It is to be noted that it is to be understood by those skilled in the art that implementation of functions of various hardware devices in the relay UE may be understood with reference to the description of the foregoing information processing process of the relay UE.

In order to implement the method described in the embodiment 2, an embodiment of the present invention provides a base station. As shown in FIG. 21, the base station includes a fourth communicator 211 and a fourth controller 212.

The fourth communicator 211 is configured to receive remote UE information, and transmit paging information for paging the remote UE under the control of the fourth controller 212.

The fourth communicator 211 is specifically configured to:
determine whether the remote UE needs to be paged according to remote UE information acquired from an MME or the relay UE, and if the remote UE needs to be paged, calculate forwarding paging occasion according to forwarding paging UE/UE group identification information, and transmit information for paging the remote UE at the paging occasion; or
calculate the paging occasion according to a configured forwarding paging period, a forwarding paging frame offset and/or a forwarding paging subframe offset, and transmit the information for paging the remote UE at the paging occasion; or
determine whether the remote UE needs to be paged according to the remote UE information acquired from the MME or the relay UE, and if the remote UE needs to be paged, calculate the paging occasion according to an identifier of the relay UE connected/paired/associated with the remote UE and a relay UE paging period, and transmit the information for paging the remote UE at the paging occasion; or
according to the remote UE information acquired from the MME or the relay UE, acquire the relay UE connected/paired/associated with the paged remote UE, and transmit the information for paging the remote UE to the relay UE.

It is to be noted that it is to be understood by those skilled in the art that implementation of functions of various hardware devices in the base station may be understood with reference to the description of the foregoing information processing process of the base station.

It is to be noted that in the embodiments of the present invention, part of "/" means "or". Correspondingly, the relay UE connected/paired/associated with the remote UE refers to the relay UE connected with the remote UE, or the relay UE paired with the remote UE, or the relay UE associated with the remote UE.

According to the mobile characteristics of the remote UE and the relay UE, there are two types of scenarios described below.

In the first scenario, the remote UE and the relay UE move independently. In this scenario, the remote UE may choose to handover to different relay UEs or handover to Uu communication according to a movement situation and a channel situation.

In the second scenario, the remote UE and the relay UE always move or maintain in the stationary state together. For example, a user's smart watch accesses the network through the relaying of the user's smartphone, and the smart watch and the smartphone have the same motion trajectory. For the first scenario, the connection relationship between the remote UE and the relay UE dynamically changes. The remote UE may establish the connection with the relay UE according to the requirement, and the network subsequently find the remote UE through the relay UE connected with the remote UE.

For the second scenario, in the case with permission of the remote UE and the relay UE, the remote UE and the relay UE may first establish an association relationship or form a node pair between the remote UE and the relay UE. When the remote UE is in the idle state, the network may find the remote UE through the relay UE associated or paired with the remote UE, and establish the connection.

It should be understood by those skilled in the art that the embodiments of the present invention may be provided as methods, systems or computer program products. Therefore, the present invention may adopt a mode of a hardware embodiment, a software embodiment, or a combination of hardware and software embodiments. In addition, the present invention may adopt a form of a computer program product implemented on one or more computer-usable storage mediums (including, but not limited to, a disk memory, an optical memory and the like) which include computer-usable program codes.

The present invention is described with reference to flowcharts and/or block diagrams of methods, devices (systems) and computer program products according to the embodiments of the present invention. It should be understood that computer program instructions may implement each flow and/or block in the flowcharts and/or block diagrams and a combination of flows and/or blocks in the flowcharts and/or block diagrams. These computer program instructions may be provided to a general-purpose computer, a special-purpose computer, an embedded processor or a processor of another programmable data processing device to produce a machine so that instructions executed by a computer or a processor of another programmable data processing device produce an apparatus for implementing functions designated in one or more flows in the flowcharts and/or one or more blocks in the block diagrams.

These computer program instructions may also be stored in a computer-readable memory which can direct a computer or another programmable data processing device to operate in a particular manner so that the instructions stored in the computer-readable memory produce a manufactured product including an instructing apparatus. The instructing apparatus implements the functions designated in one or more flows in the flowcharts and/or one or more blocks in the block diagrams.

These computer program instructions may also be loaded onto a computer or another programmable data processing device so that a series of operations and steps are performed on the computer or another programmable device to produce processing implemented by the computer. Therefore, instructions executed on the computer or another programmable device provide steps for implementing the functions designated in one or more flows in the flowcharts and/or one or more blocks in the block diagrams.

An embodiment of the present invention further provides a computer-readable storage medium configured to store computer-executable instructions for executing the above-mentioned method when executed by a processor.

The above are only preferred embodiments of the present invention and are not intended to limit the scope of the present invention. The scope of the invention is defined by the appended claims.

## Claims

1. An information processing method, applied to a remote user equipment, LTE, and comprising:
receiving (401) PC5 discontinuous reception configuration information;
performing (402) PC5 discontinuous reception configuration; and
performing (402) PC5 discontinuous reception;
wherein the PC5 discontinuous reception configuration information comprises at least one of:
a discontinuous reception period, an on-duration, a reception resource indication, a first inactive timer, a second inactive timer, a connection indication, a relay paging indication, a paging group identifier, and a remote UE identifier;
wherein the on-duration is configured to indicate a duration of PC5 reception on the remote UE;
the first inactive timer is configured to indicate timing when the remote UE triggers to enter the PC5 discontinuous reception;
the second inactive timer is configured to indicate timing when the remote UE triggers to release a PC5 connection;
the connection indication is configured to indicate whether the remote UE maintains the PC5 connection, or indicate a PC5 connection state of the remote UE;
the relay paging indication is configured to indicate that a relay LTE forwards paging information of the remote LTE, or indicate that the relay UE supports paging forwarding; and
the paging group identifier is configured to indicate a destination layer-2 identifier for transmitting the paging information,
wherein the reception resource indication comprises at least one of: a device-to-device, D2D, discovery/D2D communication resource indication, a frame offset, a subframe offset, a resource pattern/bitmap, a resource index, a D2D discovery transmission/reception resource pool, a D2D communication transmission/reception resource pool, and a D2D discovery/communication transmission/reception resource pool index;
**characterized in that**,
when receiving the PC5 discontinuous reception configuration information, the method further comprises: transmitting remote UE information to a base station; or transmitting the remote UE information to the base station through the relay LTE; or transmitting remote LTE information to a relay UE;
wherein the remote UE information comprises: a remote UE identifier and a remote UE power saving indication; wherein the remote UE power saving indication is used for indicating the base station or the relay UE to configure the PC5 discontinuous reception for the remote UE.

2. The method according to claim 1, wherein the remote UE information further comprises at least one of: a remote UE mobility state, a remote UE type, a remote UE coverage state, Uu discontinuous reception configuration of the remote LTE, a relay forwarding paging indication, and information of the relay UE connected or paired or associated with the remote UE.

3. The method according to claim 1, wherein the remote UE identifier is at least one of: a proximity services, ProSe, UE identifier, a layer-2 UE identifier, a cell radio network temporary identifier, C-RNTI, a system architecture evolution temporary mobile station identifier, S-TMSI, an international mobile subscriber identifier, IMSI, a base station X2 application entity identifier, eNBX2APID, a base station S1 application entity identifier, eNBS1APID, and a globally unique temporary identifier, GUTI.

4. The method according to claim 2, wherein the relay forwarding paging indication comprises at least one of: a relay forwarding remote UE paging request indication, a relay forwarding remote UE paging indication, and a forwarding paging indication of connected or paired or associated relay UEs.

5. The method according to claim 2, wherein the information of the relay UE connected or paired or associated with the remote UE comprises at least one of: a relay UE identifier, an identifier of a cell serving the relay UE or an identifier of a cell where the relay UE resides, and an identifier of a base station serving the relay UE or an identifier of a base station where the relay UE resides.

6. The method according to claim 2, wherein the Uu discontinuous reception configuration of the remote UE comprises at least one of: a discontinuous reception period, a long discontinuous reception period, a short discontinuous reception period, and an on-duration.

7. The method according to claim 1, wherein the step of performing PC5 discontinuous reception comprises:
acquiring paging occasion according to the PC5 discontinuous reception configuration, and receiving paging information transmitted by a relay UE at the paging occasion; and/or
acquiring an on-duration according to the PC5 discontinuous reception configuration, and receiving data/the paging information transmitted by the relay UE within the on-duration,
preferably, wherein the paging information transmitted by the relay UE comprises at least one of: a paging indication, a paging message type, a remote UE identifier, and a data arrival indication.

8. The method according to claim 7, wherein the step of receiving paging information transmitted by a relay UE comprises:
receiving scheduling control information transmitted by the relay UE and/or a data packet corresponding to the scheduling control information,
in response to determining that an identifier contained in the scheduling control information and/or a destination identifier of a data packet media access control, MAC, subhead correspond to a paging group identifier, determining that the data packet is the paging information, and
determining whether the paging information comprises a remote UE identifier, and in response to determining that the paging information contains the remote identifier, determining that the remote UE is paged;
or, the step of receiving paging information transmitted by a relay UE comprises:
receiving the scheduling control information transmitted by the relay UE and/or the data packet corresponding to the scheduling control information, and
in response to determining that the identifier contained in the scheduling control information and/or the destination identifier of the data packet MAC subhead correspond to the remote UE identifier and the data packet contains the paging information, determining that the remote UE is paged; or
the step of receiving paging information transmitted by a relay UE comprises: receiving and parsing wireless local area network, WLAN/Bluetooth, BT, data transmitted by the relay UE, and in response to determining that the WLAN/the BT data comprises the paging information for paging the remote UE, determining that the remote UE is paged;
or, the step of receiving paging information transmitted by a relay UE comprises:
receiving a discovery message transmitted by the relay UE, and
in response to determining that the discovery message contains the paging information for paging the remote UE, determining that the remote UE is paged.

9. An information processing apparatus, comprising:
a first reception unit (141), which is configured to receive PC5 discontinuous reception configuration information; and
a configuration unit (142), which is configured to perform PC5 discontinuous reception configuration and perform PC5 discontinuous reception;
wherein the PC5 discontinuous reception configuration information comprises at least one of:
a discontinuous reception period, an on-duration, a reception resource indication, a first inactive timer, a second inactive timer, a connection indication, a relay paging indication, a paging group identifier, and a remote UE identifier;
wherein the on-duration is configured to indicate a duration of PC5 reception on the remote UE;
the first inactive timer is configured to indicate timing when the remote UE triggers to enter the PC5 discontinuous reception;
the second inactive timer is configured to indicate timing when the remote UE triggers to release a PC5 connection;
the connection indication is configured to indicate whether the remote UE maintains the PC5 connection, or indicate a PC5 connection state of the remote UE;
the relay paging indication is configured to indicate that a relay LTE forwards paging information of the remote LTE, or indicate that the relay UE supports paging forwarding; and
the paging group identifier is configured to indicate a destination layer-2 identifier for transmitting the paging information,
wherein the reception resource indication comprises at least one of: a device-to-device, D2D, discovery/D2D communication resource indication, a frame offset, a subframe offset, a resource pattern/bitmap, a resource index, a D2D discovery transmission/reception resource pool, a D2D communication transmission/reception resource pool, and a D2D discovery/communication transmission/reception resource pool index;
**characterized in that**,
the information processing apparatus further comprises:
a first transmission unit, which is configured to transmit remote user equipment (LTE) information to a base station in response to determining that the received PC5 discontinuous reception configuration information is configured by the base station, or transmit the remote LTE information to the base station through a relay UE;
a second transmission unit, which is configured to transmit remote UE information to a relay UE in response to determining that the received PC5 discontinuous reception configuration information is configured by the relay UE;
wherein the remote UE information comprises: a remote UE identifier and a remote UE power saving indication; wherein the remote UE power saving indication is used for indicating the base station or the relay UE to configure the PC5 discontinuous reception for the remote UE.

## Patentansprüche

1. Informationsverarbeitungsverfahren, das auf ein entferntes Benutzergerät, UE, angewendet wird und Folgendes umfasst:
Empfangen (401) von diskontinuierlichen PC5-Empfangskonfigurationsinformationen;
Durchführen (402) einer diskontinuierlichen PC5-Empfangskonfiguration; und
Durchführen (402) eines diskontinuierlichen PC5-Empfangs;
wobei die diskontinuierlichen PC5-Empfangskonfigurationsinformationen mindestens eines von Folgendem umfassen:
eine diskontinuierliche Empfangsperiode, eine Einschaltdauer, eine Empfangsressourcenanzeige, einen ersten inaktiven Zeitgeber, einen zweiten inaktiven Zeitgeber, eine Verbindungsanzeige, eine Relais-Paging-Anzeige, eine Paging-Gruppen-Kennung und eine Kennung für das entfernte UE;
wobei die Einschaltdauer dazu konfiguriert ist, eine Dauer des PC5-Empfangs auf dem entfernten UE anzuzeigen;
der erste inaktive Zeitgeber dazu konfiguriert ist, anzuzeigen, wann das entfernte UE den diskontinuierlichen PC5-Empfang auslöst;
der zweite inaktive Zeitgeber dazu konfiguriert ist, anzuzeigen, wann das entfernte UE die Freigabe einer PC5-Verbindung auslöst; die Verbindungsanzeige dazu konfiguriert ist, anzuzeigen, ob das entfernte UE die PC5-Verbindung aufrechterhält, oder einen PC5-Verbindungsstatus des entfernten UE anzuzeigen;
die Relais-Paging-Anzeige dazu konfiguriert ist, anzuzeigen, dass ein Relais-UE Paging-Informationen des entfernten UE weiterleitet, oder anzuzeigen, dass das Relais-UE Paging-Weiterleitung unterstützt; und
die Paging-Gruppen-Kennung dazu konfiguriert ist, eine Zielschicht-2-Kennung zum Übertragen der Paging-Informationen anzuzeigen,
wobei die Empfangsressourcenanzeige mindestens eines von Folgendem umfasst: eine Vorrichtung-zu-Vorrichtung-, D2D-, Entdeckungs-/D2D-Kommunikationsressourcenanzeige, einen Frame-Offset, einen Subframe-Offset, ein Ressourcenmuster/Bitmap, einen Ressourcenindex, einen D2D-Entdeckungssende-/Empfangsressourcenpool, einen D2D-Kommunikationssende-/Empfangsressourcenpool und einen D2D-Entdeckungs-/Kommunikationssende-/Empfangsressourcenpoolindex;
**dadurch gekennzeichnet, dass**
wenn die diskontinuierlichen PC5-Empfangskonfigurationsinformationen empfangen werden, das Verfahren ferner umfasst: Übertragen von entfernten UE-Informationen an eine Basisstation; oder Übertragen der entfernten UE-Informationen an die Basisstation durch das Relais-UE; oder Übertragen von entfernten UE-Informationen an ein Relais-UE;
wobei die Informationen über das entfernte UE umfassen: eine Kennung für das entfernte UE und eine Anzeige für das Energiesparen des entfernten UE; wobei die Anzeige für das Energiesparen des entfernten UE verwendet wird, um die Basisstation oder das Relais-UE anzuweisen, den diskontinuierlichen PC5-Empfang für das entfernte UE zu konfigurieren.

2. Verfahren nach Anspruch 1, wobei die Informationen über das entfernte UE ferner mindestens eines von Folgendem umfassen: einen Mobilitätszustand des entfernten UE, einen Typ des entfernten UE, einen Zustand der Reichweite des entfernten UE, eine Konfiguration für den diskontinuierlichen Empfang des entfernten UE, eine Relaisweiterleitungs-Paging-Anzeige und Informationen über das mit dem entfernten UE verbundene oder gepaarte oder zugeordnete Relais-UE.

3. Verfahren nach Anspruch 1, wobei die Kennung des entfernten UE mindestens eine von Folgendem ist: eine Proximity Services, ProSe, UE-Kennung, eine Layer-2 UE-Kennung, eine temporäre Zellfunknetzkennung, C-RNTI, eine temporäre Systemarchitekturentwicklungs-Mobilstationskennung, S-TMSI, eine internationale Mobilteilnehmerkennung, IMSI, eine Basisstations-X2-Anwendungsentitätskennung, eNBX2APID, eine Basisstations-S1-Anwendungsentitätskennung, eNBS1APID, und eine global eindeutige temporäre Kennung, GUTI.

4. Verfahren nach Anspruch 2, wobei die Relaisweiterleitungs-Paging-Anzeige mindestens eines von Folgendem umfasst: eine Relaisweiterleitungs-Fern-UE-Paging-Anforderungsanzeige, eine Relaisweiterleitungs-Fern-UE-Paging-Anzeige und eine Weiterleitungs-Paging-Anzeige von verbundenen oder gepaarten oder zugeordneten Relais-UEs.

5. Verfahren nach Anspruch 2, wobei die Informationen über das mit dem entfernten UE verbundene oder gepaarte oder zugeordnete Relais-UE mindestens eines von Folgendem umfassen: eine Relais-UE-Kennung, eine Kennung einer Zelle, die das Relais-UE bedient, oder eine Kennung einer Zelle, in der sich das Relais-UE befindet, und eine Kennung einer Basisstation, die das Relais-UE bedient, oder eine Kennung einer Basisstation, in der sich das Relais-UE befindet.

6. Verfahren nach Anspruch 2, wobei die diskontinuierliche Uu-Empfangskonfiguration des entfernten UE mindestens eines von Folgendem umfasst: eine diskontinuierliche Empfangsperiode, eine lange diskontinuierliche Empfangsperiode, eine kurze diskontinuierliche Empfangsperiode und eine Einschaltdauer.

7. Verfahren nach Anspruch 1, wobei der Schritt des Durchführens des diskontinuierlichen PC5-Empfangs Folgendes umfasst:
Erfassen von Paging-Gelegenheiten gemäß der diskontinuierlichen PC5-Empfangskonfiguration und Empfangen von Paging-Informationen, die durch ein Relais-UE bei der Paging-Gelegenheit übertragen werden; und/oder
Erfassen einer Einschaltdauer gemäß der diskontinuierlichen PC5-Empfangskonfiguration und Empfangen von Daten/der Paging-Informationen, die durch das Relais-UE innerhalb der Einschaltdauer übertragen werden,
wobei vorzugsweise die durch das Relais-UE übertragenen Paging-Informationen mindestens eines von Folgendem umfassen:
eine Paging-Anzeige, einen Typ der Paging-Nachricht, eine entfernte UE-Kennung und eine Datenankunftsanzeige.

8. Verfahren nach Anspruch 7, wobei der Schritt des Empfangens von Paging-Informationen, die durch ein Relais-UE übertragen werden, umfasst:
Empfangen der durch das Relais-UE übertragenen Planungssteuerungsinformationen und/oder eines den Planungssteuerungsinformationen entsprechenden Datenpakets,
als Reaktion auf das Bestimmen, dass eine in den Planungssteuerungsinformationen enthaltene Kennung und/oder eine Zielkennung eines Datenpaket-MAC-Subheads einer Paging-Gruppen-Kennung entspricht, Bestimmen, dass das Datenpaket die Paging-Informationen sind, und
Bestimmen, ob die Paging-Informationen eine entfernte UE-Kennung umfassen, und als Reaktion auf das Bestimmen, dass die Paging-Informationen die entfernte Kennung enthalten, Bestimmen, dass das entfernte UE angepiept wird;
oder der Schritt des Empfangens von Paging-Informationen, die durch ein Relais-UE übertragen werden, umfasst:
Empfangen der durch das Relais-UE übertragenen Planungssteuerungsinformationen und/oder des den Planungssteuerungsinformationen entsprechenden Datenpakets, und als Reaktion auf Bestimmen, dass die in den Planungssteuerungsinformationen enthaltene Kennung und/oder die Zielkennung des MAC-Subheads des Datenpakets der Kennung des entfernten UE entspricht und das Datenpaket die Paging-Informationen enthält, Bestimmen, dass das entfernte UE angepiept wird; oder
der Schritt des Empfangens von Paging-Informationen, die durch ein Relais-UE übertragen werden, umfasst: Empfangen und Analysieren von drahtlosen lokalen Netzwerk-, WLAN-/Bluetooth-, BT-Daten, die durch das Relais-UE übertragen werden, und in Reaktion auf Bestimmen, dass die WLAN-/BT-Daten die Paging-Informationen zum Paging des entfernten UE umfassen, Bestimmen, dass das entfernte UE angepiept wird;
oder der Schritt des Empfangens von Paging-Informationen, die durch ein Relais-UE übertragen werden, umfasst:
Empfangen einer durch das Relais-UE übertragenen Entdeckungsnachricht und
als Reaktion auf Bestimmen, dass die Erkennungsnachricht die Paging-Informationen für das Paging des entfernten UE enthält, Bestimmen, dass das entfernte UE angepiept wird.

9. Informationsverarbeitungsvorrichtung, umfassend:
eine erste Empfangseinheit (141), die dazu konfiguriert ist, diskontinuierliche PC5-Empfangs-Konfigurationsinformationen zu empfangen; und
eine Konfigurationseinheit (142), die dazu konfiguriert ist, die diskontinuierliche PC5-Empfangskonfiguration durchzuführen und den diskontinuierlichen PC5-Empfang durchzuführen;
wobei die diskontinuierlichen PC5-Empfangskonfigurationsinformationen mindestens eines von Folgendem umfassen:
eine diskontinuierliche Empfangsperiode, eine Einschaltdauer, eine Empfangsressourcenanzeige, einen ersten inaktiven Zeitgeber, einen zweiten inaktiven Zeitgeber, eine Verbindungsanzeige, eine Relais-Paging-Anzeige, eine Paging-Gruppen-Kennung und eine Kennung für das entfernte UE;
wobei die Einschaltdauer dazu konfiguriert ist, eine Dauer des PC5-Empfangs auf dem entfernten UE anzuzeigen;
der erste inaktive Zeitgeber dazu konfiguriert ist, anzuzeigen, wann das entfernte UE den diskontinuierlichen PC5-Empfang auslöst;
der zweite inaktive Zeitgeber dazu konfiguriert ist, anzuzeigen, wann das entfernte UE die Freigabe einer PC5-Verbindung auslöst; die Verbindungsanzeige dazu konfiguriert ist, anzuzeigen, ob das entfernte UE die PC5-Verbindung aufrechterhält, oder einen PC5-Verbindungsstatus des entfernten UE anzuzeigen;
die Relais-Paging-Anzeige dazu konfiguriert ist, anzuzeigen, dass ein Relais-UE Paging-Informationen des entfernten UE weiterleitet, oder anzuzeigen, dass das Relais-UE Paging-Weiterleitung unterstützt; und
die Paging-Gruppen-Kennung dazu konfiguriert ist, eine Zielschicht-2-Kennung zum Übertragen der Paging-Informationen anzuzeigen,
wobei die Empfangsressourcenanzeige mindestens eines von Folgendem umfasst: eine Vorrichtung-zu-Vorrichtung-, D2D-, Entdeckungs-/D2D-Kommunikationsressourcenanzeige, einen Frame-Offset, einen Subframe-Offset, ein Ressourcenmuster/Bitmap, einen Ressourcenindex, einen D2D-Entdeckungssende-/Empfangsressourcenpool, einen D2D-Kommunikationssende-/Empfangsressourcenpool und einen D2D-Entdeckungs-/Kommunikationssende-/Empfangsressourcenpoolindex;
**dadurch gekennzeichnet, dass**
die Informationsverarbeitungsvorrichtung ferner Folgendes umfasst:
eine erste Übertragungseinheit, die dazu konfiguriert ist, entfernte Benutzergerät- (UE-) Informationen an eine Basisstation zu übertragen, als Reaktion auf das Bestimmen, dass die empfangenen diskontinuierlichen PC5-Empfangs-Konfigurationsinformationen von der Basisstation konfiguriert werden, oder die entfernten UE-Informationen über ein Relais-UE an die Basisstation zu übertragen;
eine zweite Übertragungseinheit, die dazu konfiguriert ist, entfernte UE-Informationen an ein Relais-UE zu übertragen, als Reaktion auf das Bestimmen, dass die empfangenen diskontinuierlichen PC5-Empfangs-Konfigurationsinformationen durch das Relais-UE konfiguriert sind;
wobei die Informationen über das entfernte UE umfassen: eine Kennung für das entfernte UE und eine Anzeige für das Energiesparen des entfernten UE; wobei die Anzeige für das Energiesparen des entfernten UE verwendet wird, um die Basisstation oder das Relais-UE anzuweisen, den diskontinuierlichen PC5-Empfang für das entfernte UE zu konfigurieren.

## Revendications

1. Procédé de traitement d'informations, appliqué à un équipement utilisateur distant, UE, et comprenant :
la réception (401) d'informations de configuration de réception discontinue PC5 ;
la réalisation (402) d'une configuration de réception discontinue PC5 ; et
la réalisation (402) d'une réception discontinue PC5 ;
dans lequel les informations de configuration de réception discontinue PC5 comprennent au moins l'un des éléments suivants :
une période de réception discontinue, une durée active, une indication de ressource de réception, un premier temporisateur inactif, un second temporisateur inactif, une indication de connexion, une indication de radiomessagerie relais, un identifiant de groupe de radiomessagerie et un identifiant d'UE distant ;
dans lequel la durée active est configurée pour indiquer une durée de réception PC5 sur l'UE distant ;
le premier temporisateur inactif est configuré pour indiquer une temporisation lorsque l'UE distant se déclenche pour entrer dans la réception discontinue PC5 ;
le second temporisateur inactif est configuré pour indiquer une temporisation lorsque l'UE distant se déclenche pour libérer une connexion PC5 ;
l'indication de connexion est configurée pour indiquer si l'UE distant maintient la connexion PC5, ou indiquer un état de connexion PC5 de l'UE distant ;
l'indication de radiomessagerie relais est configurée pour indiquer qu'un UE relais transfère des informations de radiomessagerie de l'UE distant, ou indiquer que l'UE relais prend en charge le transfert de radiomessagerie ; et l'identifiant de groupe de radiomessagerie est configuré pour indiquer un identifiant de couche 2 destinataire pour transmettre les informations de radiomessagerie,
dans lequel l'indication de ressource de réception comprend au moins l'un parmi : une indication de ressource de communication de découverte/D2D, de dispositif à dispositif, D2D, un décalage de trame, un décalage de sous-trame, un modèle de ressource/bitmap, un index de ressource, un pool de ressources de transmission/réception de découverte D2D, un pool de ressources de transmission/réception de communication D2D, et un index de pool de ressources de transmission/réception de découverte/communication D2D ;
**caractérisé en ce que**,
lors de la réception des informations de configuration de réception discontinue PC5, le procédé comprend en outre : la transmission d'informations d'UE distant à une station de base ;
ou la transmission des informations d'UE distant à la station de base par l'intermédiaire de l'UE relais ; ou la transmission d'informations d'UE distant à un UE relais ;
dans lequel les informations d'UE distant comprennent : un identifiant d'UE distant et une indication d'économie d'énergie d'UE distant ; dans lequel l'indication d'économie d'énergie d'UE distant est utilisée pour indiquer à la station de base ou à l'UE relais de configurer la réception discontinue PC5 pour l'UE distant.

2. Procédé selon la revendication 1, dans lequel les informations d'UE distant comprennent en outre au moins l'un parmi : un état de mobilité d'UE distant, un type d'UE distant, un état de couverture d'UE distant, une configuration de réception discontinue Uu de l'UE distant, une indication de radiomessagerie de transfert de relais, et des informations de l'UE relais connecté ou apparié ou associé à l'UE distant.

3. Procédé selon la revendication 1, dans lequel l'identifiant d'UE distant est au moins l'un parmi : un identifiant d'UE de services de proximité, ProSe, un identifiant d'UE de couche 2, un identifiant temporaire de réseau radio cellulaire, C-RNTI, un identifiant de station mobile temporaire d'évolution d'architecture système, S-TMSI, un identifiant d'abonné mobile international, IMSI, un identifiant d'entité d'application de station de base X2, eNBX2APID, un identifiant d'entité d'application de station de base S1, eNBS1APID, et un identifiant temporaire globalement unique, GUTI.

4. Procédé selon la revendication 2, dans lequel l'indication de radiomessagerie de transfert relais comprend au moins l'une des indications suivantes : une indication de demande de radiomessagerie d'UE distant de transfert relais, une indication de radiomessagerie d'UE distant de transfert relais, et une indication de radiomessagerie de transfert d'UE connectés ou appariés ou associés.

5. Procédé selon la revendication 2, dans lequel les informations de l'UE relais connecté ou appairé ou associé à l'UE distant comprennent au moins l'un parmi : un identifiant d'UE relais, un identifiant d'une cellule desservant l'UE relais ou un identifiant d'une cellule où réside l'UE relais, et un identifiant d'une station de base desservant l'UE relais ou un identifiant d'une station de base où réside l'UE relais.

6. Procédé selon la revendication 2, dans lequel la configuration de réception discontinue Uu de l'UE distant comprend au moins l'un parmi : une période de réception discontinue, une période de réception discontinue longue, une période de réception discontinue courte, et une durée active.

7. Procédé selon la revendication 1, dans lequel l'étape de réalisation de réception discontinue PC5 comprend :
l'acquisition d'une occasion de radiomessagerie selon la configuration de réception discontinue PC5, et la réception des informations de radiomessagerie transmises par un UE relais à l'occasion de radiomessagerie ; et/ou
l'acquisition d'une durée active selon la configuration de réception discontinue PC5, et la réception de données/des informations de radiomessagerie transmises par l'UE relais dans la durée active,
de préférence, dans lequel les informations de radiomessagerie transmises par l'UE relais comprennent au moins l'un parmi :
une indication de radiomessagerie, un type de message de radiomessagerie, un identifiant d'UE distant et une indication d'arrivée de données.

8. Procédé selon la revendication 7, dans lequel l'étape de réception d'informations de radiomessagerie transmises par un UE relais comprend :
la réception d'informations de contrôle d'ordonnancement transmises par l'UE relais et/ou un paquet de données correspondant aux informations de contrôle d'ordonnancement,
en réponse à la détermination qu'un identifiant contenu dans les informations de contrôle d'ordonnancement et/ou un identifiant de destination d'une sous-tête de contrôle d'accès au support, MAC, de paquets de données correspondent à un identifiant de groupe de radiomessagerie, la détermination que le paquet de données est l'information de radiomessagerie, et
le fait de déterminer si les informations de radiomessagerie comprennent un identifiant d'UE distant, et en réponse à la détermination que les informations de radiomessagerie contiennent l'identifiant distant, la détermination que l'UE distant est radiomessagé ;
ou, l'étape de réception d'informations de radiomessagerie transmises par un UE relais comprend :
la réception d'informations de contrôle d'ordonnancement transmises par l'UE relais et/ou le paquet de données correspondant aux informations de contrôle d'ordonnancement, et en réponse à la détermination que l'identifiant contenu dans les informations de contrôle d'ordonnancement et/ou l'identifiant de destination de sous-tête MAC de paquet de données correspond à l'identifiant d'UE distant et que le paquet de données contient les informations de radiomessagerie, la détermination que l'UE distant est radiomessagé ; ou
l'étape de réception d'informations de radiomessagerie transmises par un UE relais comprend : la réception et l'analyse de données de réseau local sans fil, WLAN/Bluetooth, BT, transmises par l'UE relais, et en réponse à la détermination que le WLAN/les données BT comprennent les informations de radiomessagerie de l'UE distant, la détermination que l'UE distant est radiomessagé ;
ou, l'étape de réception d'informations de radiomessagerie transmises par un UE relais comprend :
la réception d'un message de découverte transmis par l'UE relais, et
en réponse à la détermination que le message de découverte contient les informations de radiomessagerie pour radiomessager l'UE distant, la détermination que l'UE distant est radiomessagé.

9. Appareil de traitement d'informations, comprenant :
une première unité de réception (141), qui est configurée pour recevoir des informations de configuration de réception discontinue PC5 ; et
une unité de configuration (142), qui est configurée pour réaliser une configuration de réception discontinue PC5 et réaliser une réception discontinue PC5 ;
dans lequel les informations de configuration de réception discontinue PC5 comprennent au moins l'un des éléments suivants :
une période de réception discontinue, une durée active, une indication de ressource de réception, un premier temporisateur inactif, un second temporisateur inactif, une indication de connexion, une indication de radiomessagerie relais, un identifiant de groupe de radiomessagerie et un identifiant d'UE distant ;
dans lequel la durée active est configurée pour indiquer une durée de réception PC5 sur l'UE distant ;
le premier temporisateur inactif est configuré pour indiquer une temporisation lorsque l'UE distant se déclenche pour entrer dans la réception discontinue PC5 ;
le second temporisateur inactif est configuré pour indiquer une temporisation lorsque l'UE distant se déclenche pour libérer une connexion PC5 ;
l'indication de connexion est configurée pour indiquer si l'UE distant maintient la connexion PC5, ou indiquer un état de connexion PC5 de l'UE distant ;
l'indication de radiomessagerie relais est configurée pour indiquer qu'un UE relais transfère des informations de radiomessagerie de l'UE distant, ou indiquer que l'UE relais prend en charge le transfert de radiomessagerie ; et
l'identifiant de groupe de radiomessagerie est configuré pour indiquer un identifiant de couche 2 destinataire pour transmettre les informations de radiomessagerie,
dans lequel l'indication de ressource de réception comprend au moins l'un parmi : une indication de ressource de communication de découverte/D2D, de dispositif à dispositif, D2D, un décalage de trame, un décalage de sous-trame, un modèle de ressource/bitmap, un index de ressource, un pool de ressources de transmission/réception de découverte D2D, un pool de ressources de transmission/réception de communication D2D, et un index de pool de ressources de transmission/réception de découverte/communication D2D ;
**caractérisé en ce que**,
l'appareil de traitement d'informations comprend en outre :
une première unité de transmission, qui est configurée pour transmettre des informations d'équipement utilisateur (UE) distant à une station de base en réponse à la détermination que les informations de configuration de réception discontinue PC5 reçues sont configurées par la station de base, ou transmettre les informations d'UE distant à la station de base par l'intermédiaire d'un UE relais ;
une seconde unité de transmission, qui est configurée pour transmettre des informations d'UE distant à un UE relais en réponse à la détermination que les informations de configuration de réception discontinue PC5 reçues sont configurées par l'UE relais ;
dans lequel les informations d'UE distant comprennent : un identifiant d'UE distant et une indication d'économie d'énergie d'UE distant ; dans lequel l'indication d'économie d'énergie d'UE distant est utilisée pour indiquer à la station de base ou à l'UE relais de configurer la réception discontinue PC5 pour l'UE distant.
